# EUROPEAN PATENT APPLICATION

(11) **EP 4 764 046 A1**
(43) Date of publication of application: **24.06.2026**
(21) Application number: 25206706.1
(22) Date of filing: 03.10.2025
(51) Int. Cl.: D03D 1/00, D03D 11/02, D03D 25/00

(54) **METHOD OF MANUFACTURING A WOVEN FABRIC FOR A COMPOSITE COMPONENT**

(30) Priority: 18.12.2024 US 202418986171
(71) Applicant: General Electric Company, Cincinnati, Ohio 45215 (US)
(72) Inventor: WANG, Mingchao, Evendale, 45215 (US); BOYER, Mitchell, Evendale, 45215 (US); ARMSTRONG, Douglas Lorrimer, Evendale, 45215 (US); XIE, Ming, Evendale, 45215 (US)
(74) Representative: Openshaw & Co.

(57) **Abstract**

Method of manufacturing a woven fabric (400, 408, 500, 504, 520, 600, 604, 700, 702) for a composite component (300, 301) for a gas turbine engine (100). The method includes weaving a plurality of reinforcing fiber tows (202) to form the woven fabric (400, 408, 500, 504, 520, 600, 604, 700, 702). The woven fabric (400, 408, 500, 504, 520, 600, 604, 700, 702) is a three-dimensional woven fabric (400, 408, 500, 504, 520, 600, 604, 700, 702). At least one of a plurality of first fiber tows (210) is arrayed in the thickness direction or a plurality of second fiber tows (220) is arrayed in the thickness direction to form a plurality of fiber layers (222). The method also includes interweaving a plurality of interlocking fiber tows (230) through the plurality of fiber layers (222) to connect the plurality of fiber layers (222) to each other in a thickness direction to form an interlocked region (410), and forming a bifurcated region (420) where adjacent layers of the plurality of fiber layers (222) are free from interconnection by interlocking fiber tows (230) forming a plurality of bifurcated layers (430).

## Description

This invention was made with United States Government support. The United States Government may have certain rights in the invention.

### TECHNICAL FIELD

The present disclosure relates to composite components and methods of forming the composite components, particularly, composite components for aircraft engines.

### BACKGROUND

Turbine engines used in aircraft generally include a fan and a turbo-engine section arranged in flow communication with one another. A combustor is arranged in the turbo-engine to generate combustion gases for driving a turbine in the turbo-engine of the turbine engine, and the turbine may be used to drive the fan. A portion of air flowing into the fan flows through the turbo-engine as core air, and another portion of the air flowing into the fan bypasses the core section and flows through the turbine engine as bypass air. The turbo-engine section may include one or more compressors to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional view of a turbine engine of for an aircraft.
FIG. 2A is a schematic view of a three-dimensional fiber weave pattern.
FIG. 2B is a schematic, cross-sectional view of the fiber weave pattern shown in FIG. 2A taken along line 2B-2B in FIG. 2A.
FIG. 2C is a schematic, cross-sectional view of a fiber weave pattern shown similar to fiber weave pattern shown in FIG. 2A, but with a different interlocking fiber pattern.
FIG. 2D is a schematic, cross-sectional view of a fiber weave pattern shown similar to fiber weave pattern shown in FIG. 2A, but with another interlocking fiber pattern.
FIG. 3 is a flow chart of a general process for manufacturing a composite component that may be used in the turbine engine of FIG. 1.
FIG. 4A is a schematic view of a composite component that may be used in the turbine engine.
FIG. 4B is a cross-sectional view of the composite component taken along line 4B-4B in FIG. 4A.
FIG. 4C is a schematic view of a composite component that may be used in the turbine engine.
FIG. 4D is a cross-sectional view of the composite component taken along line 4D-4D in FIG. 4C.
FIG. 5A is a schematic view of a woven fabric that may be used to form one of the composite components shown in FIGS. 4A to 4D. FIG. 5A shows the woven fabric in a woven configuration.
FIG. 5B shows the woven fabric of FIG. 5A in a shaped preform configuration.
FIG. 6A is a schematic view of a woven fabric that may be used to form one of the composite components shown in FIGS. 4A to 4D. FIG. 6A shows the woven fabric in a woven configuration.
FIG. 6B shows the woven fabric of FIG. 6A in a shaped preform configuration.
FIG. 6C is a schematic view of a woven fabric that may be used to form one of the composite components shown in FIGS. 4A to 4D. FIG. 6C shows the woven fabric in a woven configuration.
FIG. 6D shows the woven fabric of FIG. 6C in a shaped preform configuration.
FIG. 6E is a schematic view of a woven fabric that may be used to form one of the composite components shown in FIGS. 4A to 4D. FIG. 6E shows the woven fabric in a woven configuration.
FIG. 6F shows the woven fabric of FIG. 6E in a shaped preform configuration.
FIG. 7A is a schematic view of a woven fabric that may be used to form one of the composite components shown in FIGS. 4A to 4D. FIG. 7A shows the woven fabric in a woven configuration.
FIG. 7B shows the woven fabric of FIG. 7A in a shaped preform configuration.
FIG. 7C is a schematic view of a woven fabric that may be used to form one of the composite components shown in FIGS. 4A to 4D. FIG. 7C shows the woven fabric in a woven configuration.
FIG. 7D is a schematic view of a woven fabric that may be used to form one of the composite components shown in FIGS. 4A to 4D. FIG. 7D shows the woven fabric in a woven configuration.
FIG. 7E shows the woven fabric of FIG. 7D in a shaped preform configuration.
FIG. 8A is a schematic view of a woven fabric that may be used to form a composite component. FIG. 8A shows the woven fabric in a woven configuration.
FIG. 8B shows the woven fabric of FIG. 8A in a shaped preform configuration.
FIG. 8C is a schematic view of a woven fabric that may be used to form a composite component. FIG. 8C shows the woven fabric in a woven configuration.
FIG. 8D shows the woven fabric of FIG. 8C in a shaped preform configuration.
FIG. 9A is a schematic view of a woven fabric that may be used to form a composite component. FIG. 9A shows the woven fabric in a woven configuration.
FIG. 9B is a schematic view of a woven fabric that may be used to form a composite component. FIG. 9B shows the woven fabric in a woven configuration.
FIG. 10 is a schematic, cross-sectional view of a preform that may be used for a composite component of the turbine engine.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The singular forms "a," "an," and "the" include plural references unless the context clearly dictates otherwise.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), and a metal matrix composite (MMC). The composite may be formed of a matrix material and a reinforcing element, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle.

"Preform" as used herein is a piece of three-dimensional woven fabric formed by a plurality of reinforcing fibers including warp fiber tows and weft fiber tows.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. The adhesive can require curing at elevated temperatures or other hardening techniques.

As used herein, PMC refers to a class of materials. The PMC material may be a prepreg. A prepreg is a reinforcement material (e.g., a reinforcing fiber) pre-impregnated with a polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven fabric. Woven fabrics can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods, including but not limited to melt infiltration, chemical vapor infiltration, polymer impregnation pyrolysis (PIP), or any combination thereof.

The term "metallic" as used herein is indicative of a material that includes metal such as, but not limited to, titanium, iron, aluminum, stainless steel, and nickel alloys. A metallic material or a metal alloy can be a combination of at least two or more elements or materials, where at least one is a metal.

Traditional two-dimensional (2D) layup designs typically used for forming composite gas turbine engine components are challenging to manufacture and may have limited interlaminar strength. Specifically, composite components for gas turbine engines are generally constructed with hand laid plies or by combining multiple woven or prefabricated preforms into one molded part. Hand layup or assembly of preforms increases the labor and the costs required to build the component. Assembly of preforms also comes with assembly and positioning challenges. Moreover, a composite component formed from 2D plies or multiple preforms will be more likely to have limited interlaminar loading capability. Three-dimensional (3D) woven fabrics include interlocking fibers that connect adjacent fiber layers, improving the interlaminar loading capability. Such interlocking fibers, however, may limit the movement and the geometries into which the woven fabric may be shaped. The embodiments discussed herein disclose methods of forming a three-dimensional (3D) woven fabric that can be used and shaped into more complex geometries. The woven fabrics discussed herein include a bifurcated region that allows movement of one interlocked region of the woven fabric relative to others, allowing a single woven preform to be used to form, for example, flanges, simplifying the manufacturing process of forming the preform and thus the composite component.

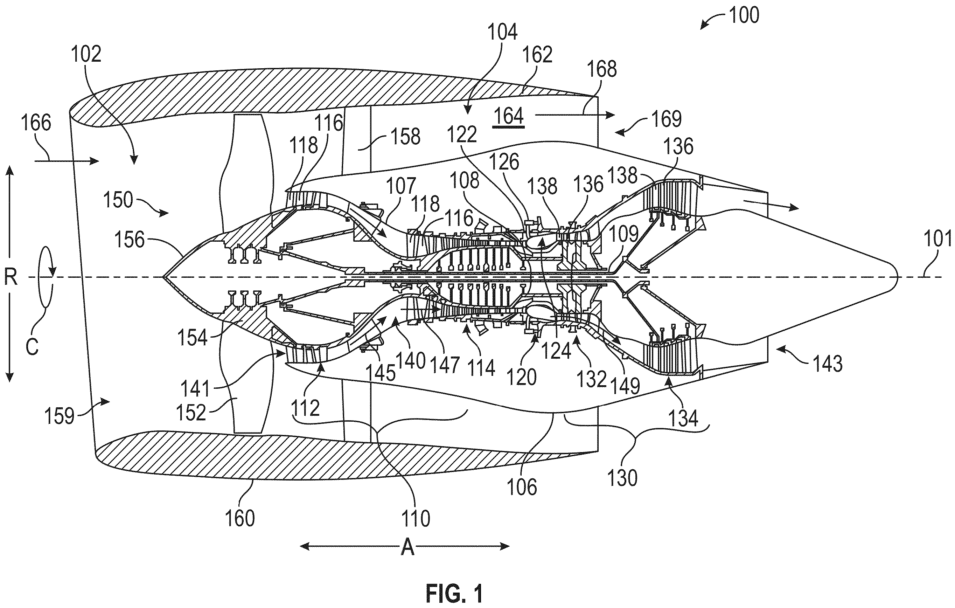

The composite materials discussed herein may be particularly suitable for use in turbine engines for aircraft. FIG. 1 is a schematic, cross-sectional view a turbine engine 100 that may be used on an aircraft. The turbine engine 100 has an axial direction A (extending parallel to a longitudinal centerline axis 101, shown for reference in FIG. 1), a radial direction R, and a circumferential direction C. The circumferential direction C extends in a direction rotating about the longitudinal centerline axis 101 (the axial direction A). In the embodiment depicted in FIG. 1, the turbine engine 100 is a high bypass turbofan engine, including a fan section 102 and a turbo-engine 104 disposed downstream from the fan section 102.

The turbo-engine 104 depicted in FIG. 1 includes in serial flow relationship, a compressor section 110, a combustion section 120, and a turbine section 130. The turbo-engine 104 is substantially enclosed within an outer casing 106 that is substantially tubular and defines a core inlet 141. In this embodiment, the core inlet 141 is annular. As schematically shown in FIG. 1, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbo-engine 104 includes a high-pressure (HP) shaft 108 or a HP spool, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 may include a plurality of compressor stages. In each stage, a plurality of compressor blades 116 rotate relative to a corresponding plurality of static compressor vanes 118 (also called nozzles) to compress or to pressurize the core air 145 passing through the stage. In a single compressor stage, the plurality of compressor blades 116 can be provided in a ring, extending radially outwardly relative to the longitudinal centerline axis 101 from a blade platform to a blade tip (e.g., extend in the radial direction R). The compressor blades 116 may be a part of a compressor rotor that includes a disk and the plurality of compressor blades 116 extend radially from the disk. Other configurations of the compressor rotor may be used, including, for example, blisks where the disk and the compressor blades 116 are integrally formed with each other to be a single piece. The corresponding static compressor vanes 118 are positioned upstream of and adjacent to the rotating compressor blades 116. The compressor vanes 118 for a stage of the compressor can be mounted to a core casing 107 in a circumferential arrangement. The core casing 107 may define, at least in part, the core air flow path 140. Each compressor stage may be used to sequentially compress the core air 145 flowing through the core air flow path 140, generating compressed air 147. Any suitable number of compressor blades 116, compressor vanes 118, and compressor stages may be used.

Each of the HP turbine 132 and the LP turbine 134 also may include a plurality of turbine stages. In each stage, a plurality of turbine blades 136 rotate relative to a corresponding plurality of static turbine vanes 138 (also called a nozzle) to extract energy from combustion gases 149 passing through the stage. The turbine blades 136 may be a part of a turbine rotor. Any suitable configuration for a turbine rotor may be used, including, for example, a disk with the plurality of turbine blades 136 extending from the disk. The corresponding static turbine vanes 138 are positioned upstream of and adjacent to the rotating turbine blades 136. The turbine vanes 138 for a stage of the turbine can be mounted to the core casing 107 in a circumferential arrangement.

In the combustion section 120, fuel, received from a fuel system (not shown), is injected into a combustion chamber 124 of a combustor 122 by fuel nozzles 126. The fuel is mixed with the compressed air 147 from the compressor section 110 to form a fuel and air mixture, and combusted, generating combustion products (i.e., combustion gases 149). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft. The combustion gases 149 are discharged from the combustion chamber 124. These combustion gases may be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The turbine engine 100 and, more specifically, the turbo-engine 104 further includes one or more drive shafts. As noted above, the turbo-engine 104 includes the high-pressure (HP) shaft 108 drivingly connecting the HP turbine 132 to the HP compressor 114, and the low-pressure (LP) shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of thermal energy or kinetic energy from the combustion gases 149 is extracted via the one or more stages of the turbine blades 136 and turbine vanes 138 of the HP turbine 132. This causes the HP shaft 108 to rotate, which supports operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the thermal energy or the kinetic energy is extracted from the combustion gases 149 via one or more stages of the turbine blades 136 and the turbine vanes 138 of the LP turbine 134. This causes the LP shaft 109 to rotate, which supports operation of the LP compressor 112 (self-sustaining cycle), and rotating the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the compressor rotors and the turbine rotors.

The fan section 102 shown in FIG. 1 includes a fan 150 having a plurality of fan blades 152 coupled to a disk 154. The fan blades 152 and the disk 154 are rotatable, together, about the longitudinal centerline (axis) 101 by the LP shaft 109. The LP compressor 112 may also be directly driven by the LP shaft 109, as depicted in FIG. 1. The disk 154 is covered by a fan hub 156 aerodynamically contoured to promote an airflow through the plurality of fan blades 152. Further, a nacelle 160 circumferentially surrounds the fan 150, and in the depicted embodiment, at least a portion of the turbo-engine 104. The nacelle 160 may also be referred to as an annular fan casing or an outer nacelle. The nacelle 160 is supported relative to the turbo-engine 104 and, more specifically, the outer casing 106 by a plurality of outlet guide vanes 158 that are circumferentially spaced about the nacelle 160 and the turbo-engine 104. A downstream section 162 of the nacelle 160 extends over an outer portion of the turbo-engine 104 and, more specifically, the outer casing 106 so as to define a bypass airflow passage 164 therebetween.

During operation of the turbine engine 100, a volume of air 166 enters the turbine engine 100 through an inlet of the nacelle 160 and/or the fan section 102 (referred to herein as a (an engine inlet 159). As the volume of air 166 passes across the fan blades 152, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as other suitable numbers or arrangements of shafts, compressors, turbines, fans, etc. Further, although the turbine engine 100 is shown as a direct drive, fixed-pitch turbofan engine, in other embodiments, the turbine engine 100 may be a geared turbine engine (e.g., including a gearbox between the fan 150 and a shaft driving the fan, such as the LP shaft 109), may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

The turbine engine 100 discussed herein is suitable for use on aircraft. Suitable aircraft include, for example, airplanes, helicopters, and unmanned aerial vehicles (UAV). In other embodiments, the turbine engine may be any other turbine engines, such as an industrial turbine engine incorporated into a power generation system, a nautical turbine engine on a ship or other vessel.

Various components of the turbine engine 100 may be formed from composite materials. These components are referred to herein as composite components. The fan blades 152, the outlet guide vanes 158, compressor blades 116, and compressor vanes 118 may be made from PMC materials, for example. Other composites, such as CMC materials, may be used for other components, including, for example, turbine blades 136, turbine vanes 138, and components of the combustion section 120 such as combustor liners used to form the combustion chamber 124. Moreover, although the embodiments are described relative to a turbine engine 100, the composite component and methods of manufacturing may be used to form composite components used in applications beyond turbine engines.

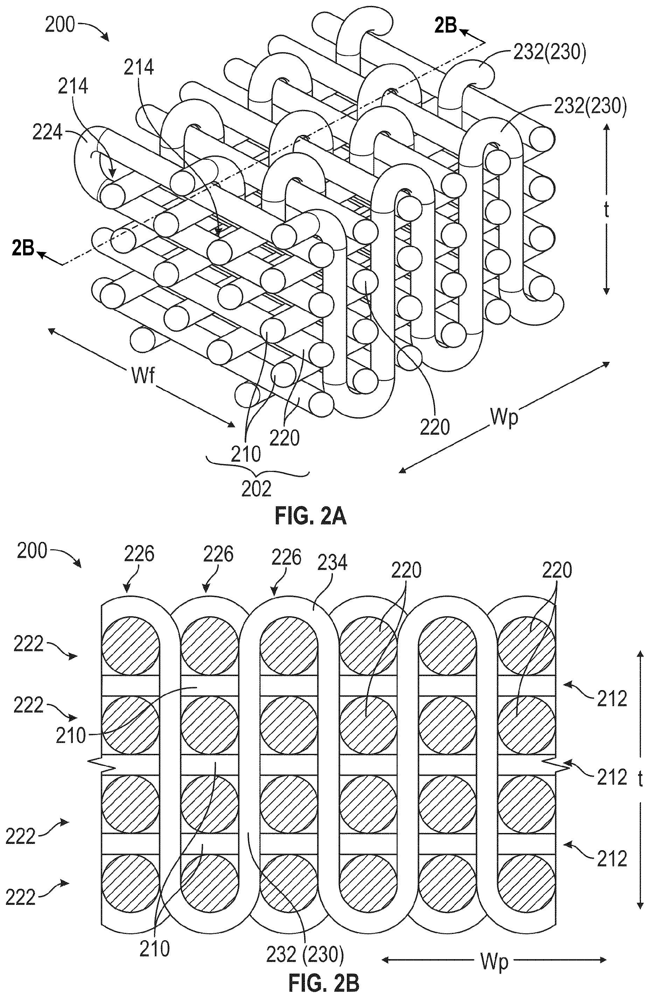

FIGS. 2A and 2B are schematics showing a three-dimensional fiber weave pattern that may be used to form a woven fabric 200. FIG. 2B is a cross-sectional view taken along line B-B in FIG. 2A. In embodiments discussed herein, the composite components may be formed from a plurality of reinforcing fibers and, more specifically a plurality of reinforcing fiber tows 202. The plurality of reinforcing fiber tows 202 are woven together to form the woven fabric 200. The plurality of reinforcing fiber tows 202 includes a plurality of first fiber tows, which in this embodiment is a plurality of warp fiber tows 210. The plurality of reinforcing fiber tows 202 also includes a plurality of second fiber tows, which in this embodiment is a plurality of weft fiber tows 220. The weft fiber tows 220 are oriented transversely to the warp fiber tows 210, and in the depicted embodiment, the warp fiber tows 210 and the weft fiber tows 220 are oriented generally orthogonally to each other. The woven fabric 200 thus includes a warp direction Wp (also referred to as a first direction) and a weft direction Wf (also referred to as a second direction). The warp fiber tows 210 extend in the warp direction Wp and the weft fiber tows 220 extend in the weft direction Wf.

In the depicted embodiment, the woven fabric 200 is a three-dimensional woven fabric and the woven fabric 200 also includes a thickness direction t. The thickness direction may also be referred to as a z direction. The warp fiber tows 210 may be arranged relative to each other to form a plurality of warp fiber layers 212 in the thickness direction t and to form a plurality of warp fiber columns 214 in the weft direction Wf. Three warp fiber layers 212 are depicted in FIGS. 2A and 2B, but the woven fabric 200 may include any other numbers of warp fiber layers 212, including more than three warp fiber layers 212.

During a weaving process, the warp fiber tows 210 may be held in tension in the warp direction Wp, and one of the weft fiber tows 220 is passed or drawn therethrough. A shuttle (not shown) may be used to draw the one of the weft fiber tows 220 through the warp fiber tows 210. The shuttle may be passed through the warp fiber tows 210 in a first direction and then reversed to pass through the warp fiber tows 210 at a different height in the thickness direction forming a plurality of weft fiber layers 222 in the thickness direction t. One of the weft fiber tows 220 may be continuous through at least a portion of the thickness of the woven fabric 200, and the one of the weft fiber tows 220 may include a portion extending in the thickness direction t, which may be referred to in some embodiments as a turnaround. This portion of the weft fiber tow thus may be referred to herein as a turnaround portion 224. The warp fiber tows 210 may be moved relative to each other to allow a space for the one of the weft fiber tows 220 to pass through the space. The warp fiber tows 210 may be moved relative to each other in different ways to create different patterns. In this way, weaving the woven fabric 200 includes positioning the warp fiber tows 210 (e.g., such that the warp fiber tows 210 are held stationary in tension), then laying the weft fiber tows 220 (e.g., such that the weft fiber tows 220 are drawn through and inserted over and under the corresponding warp fibers 210), and repeating this process until the woven fabric 200 is formed. The weft fiber tows 220 may be arranged relative to each other to form the plurality of weft fiber layers 222 in the thickness direction t and to form a plurality of weft fiber columns 226 in the warp direction Wp.

The woven fabric 200 also includes a plurality of interlocking fiber tows 230 (also referred to as Z-weaver fiber tows). The interlocking fiber tows 230 are additional warp fiber tows that are directed through the thickness of the woven fabric 200 during weaving to stitch the reinforcing fiber tows 202 together. The interlocking fiber tows 230 are woven to extend between two or more of the weft fiber layers 222. Different fiber patterns may be used for the interlocking fiber tows 230. A first interlocking fiber pattern, shown in FIGS. 2A and 2B, is an orthogonal interlocking pattern and the interlocking fiber tows 230 are referred to herein as orthogonal interlocking fiber tows 232. In this pattern, the orthogonal interlocking fiber tows 232 extend substantially in a direction that is orthogonal to the warp direction Wp, which is the thickness direction t in the depicted embodiment. As with the weft fiber tows 220, the interlocking fiber tows 230 (e.g., the orthogonal interlocking fiber tows 232) may include a turnaround portion 234. In the depicted embodiment, the turnaround portion 234 of the orthogonal interlocking fiber tows 232 is positioned to form an alternating pattern between each warp fiber columns 214. In the depicted embodiment, the orthogonal interlocking fiber tows 232 extend through the thickness of the woven fabric 200 and may be referred to as through-thickness interlocking fiber tows, but other thicknesses may be used.

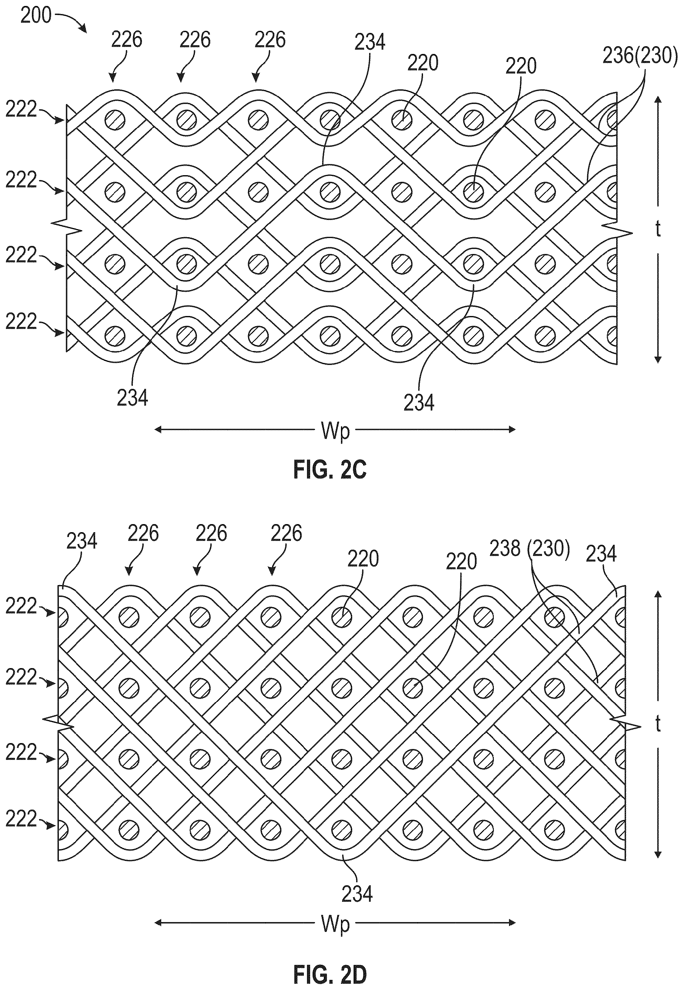

A second interlocking fiber pattern, shown in FIG. 2C, is an angle interlock pattern and, more specifically, a layer-to-layer angle interlock pattern. FIG. 2C is a cross-sectional view of a woven fabric taken from a perspective similar to FIG. 2B. The interlocking fiber tows 230 are referred to in this embodiment as angled interlocking fiber tows 236. Instead of extending orthogonally through the woven fabric 200, the angled interlocking fiber tows 236 form an oblique angle relative to the warp direction Wp. In the depicted embodiment, the angled interlocking fiber tows 236 extend through adjacent weft fiber layers 222 in an alternating or a sinusoidal pattern to interlock these adjacent layers with each other, with the oblique angle formed between adjacent turnaround portions 234 of the angled interlocking fiber tows 236. The turnaround portions 234 of the angled interlocking fiber tows 236 are located on every other weft fiber columns 226, but, in other embodiments, two or more weft fiber columns 226 may be between adjacent turnaround portions 234 of the angled interlocking fiber tows 236. In other embodiments, the angled interlocking fiber tows 236 may extend through more than two adjacent weft fiber layers 222. For example, as shown in FIG. 2D, the interlocking fiber tows 230 are through-thickness interlocking fiber tows, which are referred to herein as through-thickness angled interlocking fiber tows 238. FIG. 2D is a cross-sectional view of a woven fabric taken from a perspective similar to FIG. 2B. The warp fiber tows 210 are omitted in FIGS. 2C and 2D for clarity.

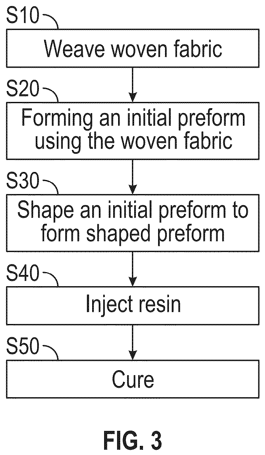

FIG. 3 is a flow chart of a general process of manufacturing a composite component that may be used in the turbine engine of FIG. 1. The method includes, in step S10 weaving the woven fabric 200, such as on a loom. In step S20, the method includes forming an initial preform using one or more pieces of woven fabric 200. This step may include, for example, laying up a plurality of woven fabrics 200 or otherwise positioning the plurality of woven fabrics 200 relative to each other to form the initial preform. In some embodiments, the one or more pieces of woven fabric 200 can be placed on a forming tool such as a table or a mold. In step S30, the initial preform is shaped to form a shaped preform. Shaping the initial preform may include, for example, using a mold tool to shape the initial preform. Suitable shaping processes may include vacuum forming or other forming processes to impart a shape to the initial preform. Tackifiers, like resin film, resin powder, resin solutions, or resin suspensions, also can be used to help the preform forming process. The shaped preform may form a final preform, but optionally, additional machining processes and manufacturing processes, such as adding inserts, may be carried out on the shaped preform to form the final preform.

After the preform is complete (i.e., the final preform), a matrix material may be injected into the preform in step S40 to generate an infiltrated (or an impregnated) preform. When the composite component is a polymer matrix composite, polymers and/or a resin may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes may be used in this step depending upon the matrix material. As noted above, the preform may be formed using prepreg fiber tows to introduce a matrix material, and, in such an embodiment, this step (step S40) may be omitted.

The method continues with curing the infiltrated preform in step S50 to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material.

Further, the composite component may be finish machined as needed. Finish machining may define the final finished shape or contour of the composite component. For example, when the composite component is a fan blade 152 (FIG. 1), the edges of the fan blade 152 may be machined to define the final shape or the contour of the airfoil. Additionally, the composite component can be coated with one or more suitable coatings, such as, e.g., an environmental barrier coating (EBC) or a polyurethane surface coating.

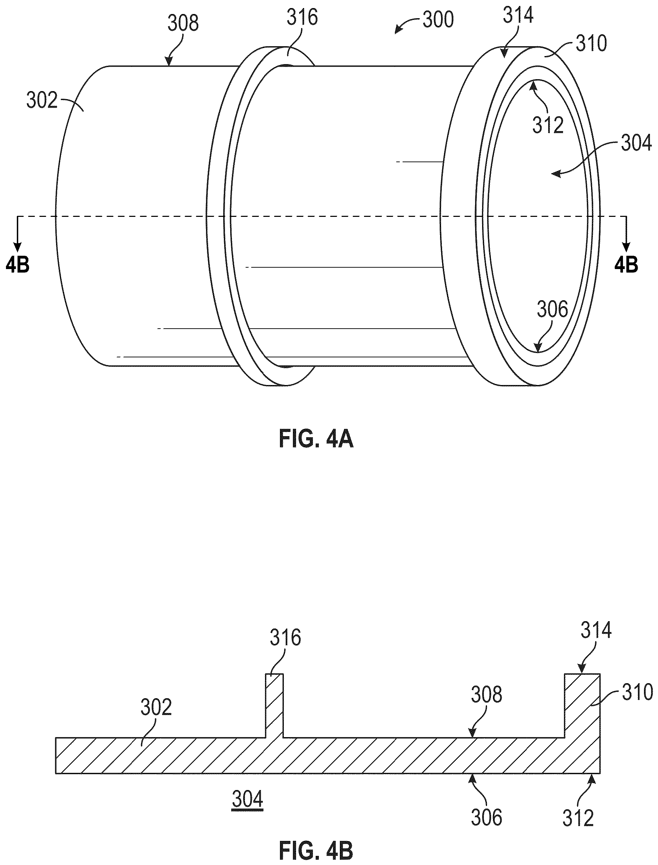

FIG. 4A is a schematic view of a composite component 300 that may be used in the turbine engine 100 (FIG. 1). FIG. 4B is a cross-sectional view of the composite component 300 taken along line 4B-4B in FIG. 4A. As noted above, various components of the turbine engine 100 may be composite components formed from composite materials, and, in particular, a preform formed of one or more woven fabrics 200 (FIG. 2A). The composite component 300 is an example of such a component. This composite component 300 depicted in FIGS. 4A and 4B may be, for example, a portion of the core casing 107 (FIG. 1) or the nacelle 160 (FIG. 1). The composite component 300 is annular having a main body 302 defining a passage 304 therethrough. The main body 302 includes an inner diameter 306 and an outer diameter 308. The inner diameter 306 is on a surface defining the passage 304 and the outer diameter 308 is on a surface forming the external surface of the main body 302. The composite component 300 includes a flange on one end, which is referred to herein as an end flange 310. The end flange 310 depicted in FIG. 4A extends radially outward from the main body 302. The end flange 310 includes an inner diameter 312, which, as depicted, is the same diameter as the inner diameter 306 of the main body 302, and an outer diameter 314, which is larger than the outer diameter 308 of the main body 302. The composite component 300 may also include an additional flange extending radially outward from the main body 302. This flange is referred to herein as a mid-flange 316.

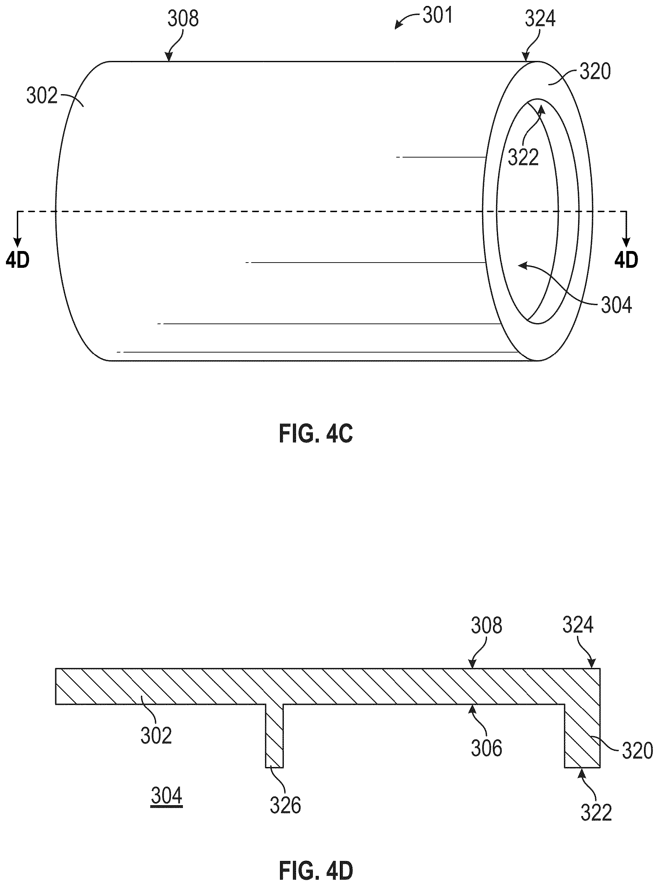

FIG. 4C is a schematic view of an alternate composite component 301 that may be used in the turbine engine 100 (FIG. 1). FIG. 4D is a cross-sectional view of the composite component 301 taken along line 4D-4D in FIG. 4C. The composite component 301 is similar to the composite component 300 depicted in FIG. 4A and is an example of a composite component of the turbine engine 100 (FIG. 1). The composite component 301 also includes an end flange 320 and a mid-flange 326, but the flanges (i.e., the end flange 320 and a mid-flange 326) extend radially inward from an inner surface of the main body 302 into the passage 304. The end flange 320 includes an inner diameter 322, which is smaller than the inner diameter 306 of the main body 302, and an outer diameter 324, which, as depicted, is the same diameter as the outer diameter 308 of the main body 302.

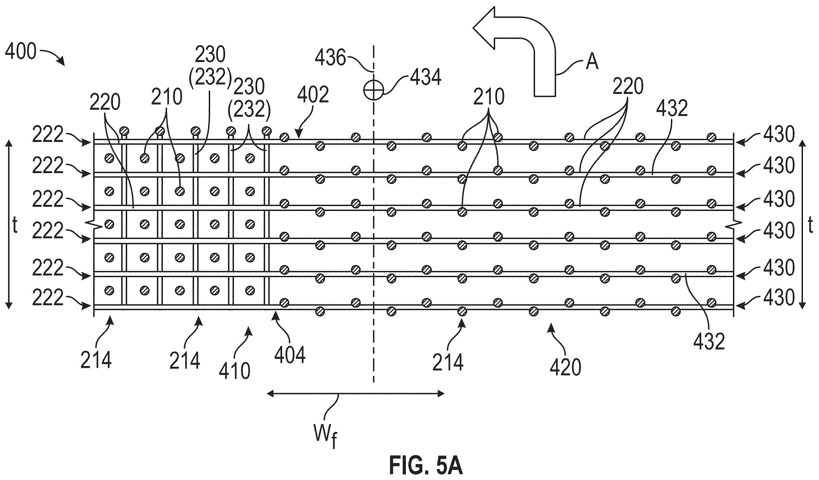

The warp fiber tows 210 (FIG. 2A) may be oriented in a circumferential direction of the composite component 300 and 301 and the weft fiber tows 220 (FIG. 2A) may be oriented in an axial direction. As will be discussed further below, the woven fabric 400 (FIG. 5A) used to form the composite component 300 or the composite component 301 may include one or more bifurcated regions 420 (FIG. 5A), allowing rotation of one portion of the woven fabric 400 (e.g., the bifurcated regions 420 themselves or the second interlocked region 414 (FIG. 5C)) to rotate relative to other portions and form the end flange 310 or the end flange 320 and the mid-flange 316 or the mid-flange 326.

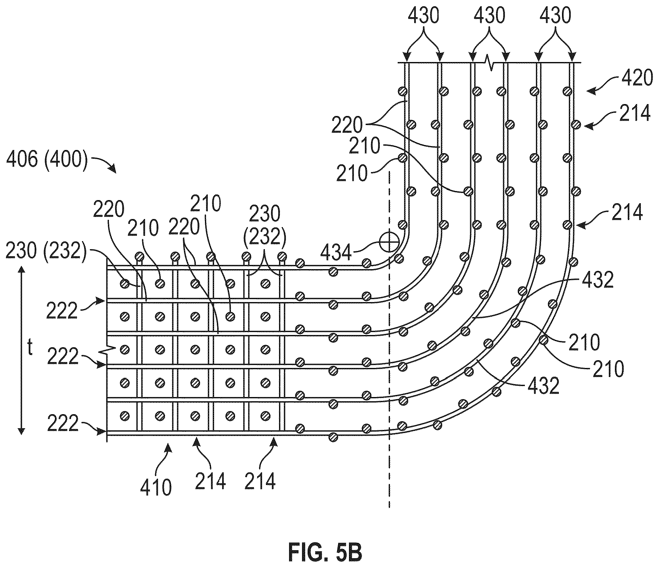

FIGS. 5A and 5B are schematic views of a woven fabric 400 that may be used to form the composite component 300 shown in FIGS. 4A and 4B or the alternate composite component 301 shown in FIGS. 4C and 4D. The woven fabric 400 shown in FIGS. 5A and 5B may be formed similarly to the woven fabric 200 discussed above with reference to FIGS. 2A to 2D, and that discussion applies here. As discussed above, the woven fabric 200 (FIG. 2A) includes a plurality of warp fiber layers 212 (FIG. 2B) and a plurality of weft fiber layers 222. The following discussion will refer to the weft fiber layers 222 as a plurality of fiber layers from which the bifurcated layers 430 extend, and the direction of rotation (i.e., the rotational axis 434) is about an axis in the warp direction. This discussion, however, may also apply to the warp fiber layers 212 as the as a plurality of fiber layers from which the bifurcated layers 430 extend, and the direction of rotation (i.e., the rotational axis 434) can be about an axis in the weft direction. For clarity, only some of the reinforcing fiber tows 202 are labeled in the following figures.

The woven fabric 400 depicted in FIGS. 5A and 5B includes two types of regions, an interlocked region 410 and a bifurcated region 420. The interlocked regions 410 may be formed by interweaving, in the manner discussed above (e.g., in step S10 (FIG. 3)), the plurality of interlocking fiber tows 230 between the plurality of weft fiber layers 222 to connect the plurality of weft fiber layers 222 to each other in the thickness direction t. The interlocking fiber tows 230 depicted in FIG. 5A are orthogonal interlocking fiber tows 232, but any one of the interlocking fiber tows 230 discussed above can be used.

In the bifurcated region 420, adjacent layers of the plurality of weft fiber layers 222 are free from interconnection by interlocking fiber tows 230 forming a plurality of bifurcated layers 430. More specifically, the bifurcated layer 430 can be one of the weft fiber layers 222 that is free from interconnection with an adjacent one of the weft fiber layers 222. Additionally, or alternatively, the bifurcated layers 430 can be one of the warp fiber layers 212 (FIG. 2A) that is free from interconnection with an adjacent one of the warp fiber layers 212.

The bifurcated region 420 can be free from the interlocking fiber tows 230 and the weaving process (step S10 (FIG. 3)) can include forming the bifurcated region 420 by weaving warp fiber tows 210 and weft fiber tows 220, but not interlocking fiber tows 230 in the bifurcated region 420. Alternatively, a minimal amount of interlocking fiber tows 230 may be used during the weaving process (e.g., step S10 in FIG. 3) in the bifurcated region 420 to stabilize adjacent layers of the plurality of weft fiber layers 222 during processing, and the bifurcated region 420 may be formed by severing or otherwise removing these temporary interlocking tows prior to forming. In this manner, the interlocked region 410 is a three-dimensional (3D) woven region, and the bifurcated region 420 is a two-dimensional (2D) region comprising a plurality of two-dimensional woven plies 432 integrally woven with, and extending from, corresponding weft fiber layers 222 of the interlocked region 410. The weft fiber tows 220 in each weft fiber layer 222 of the interlocked region 410 can be the same fiber tow and continuous with the weft fiber tows 220 of each two-dimensional woven ply 432 of the bifurcated region 420.

The woven fabric 400 is woven to include a first surface 402 and a second surface 404. The woven fabric 400 has a thickness in the thickness direction t and each of the interlocked region 410 and the bifurcated region 420 extends through the thickness of the woven fabric 400 from the first surface 402 to the second surface 404.

The interlocking fiber tows 230 not only help to provide interlamellar strength by preventing separation in the thickness direction t, but the interlocking fiber tows 230 also constrict movement in the weft direction Wf. With adjacent bifurcated layers 430 free from interconnection with each other, the weft fiber tows 220 of the bifurcated layers 430 in the bifurcated region 420 can move or slide relative to each other, enabling the two-dimensional woven plies 432 of the bifurcated region 420 to rotate relative to the interlocked region 410.

The woven fabric 400 shown in FIGS. 5A and 5B can be used to form a preform for the composite component 300 shown in FIGS. 4A and 4B or the composite component 301 shown in FIGS. 4C and 4D. In step S10 (FIG. 3) the woven fabric 400 is woven with the reinforcing fiber tows 202 (FIG. 2A) positioned as described above. After the woven fabric 400 is positioned in step S20 (FIG. 3) as part of laying up the initial preform, the initial preform is shaped to form a shaped preform 406 in step S30. More specifically, shaping the woven fabric 400 to form the shaped preform 406 shown in FIG. 5B can include rotating at least a portion of the woven fabric 400, such as the bifurcated region 420 (i.e., the two-dimensional woven plies 432), about a rotational axis 434 extending in the warp direction Wp. FIG. 5A shows the woven fabric 400 in the initial preform, and the two-dimensional woven plies 432 of the bifurcated region 420 can be rotated in direction A to form the shaped preform 406 in FIG. 5B. The rotational axis 434 is located in a plane 436 intersecting the bifurcated region 420.

The bifurcated region 420 and, more specifically, the bifurcated layers 430 allow for a relatively significant amount of rotation of one or more weft fiber layers 222, such as two or more weft fiber layers 222, in the bifurcated region 420 (i.e., the two-dimensional woven plies 432). The plurality of two-dimensional woven plies 432 can be rotated by, for example, forty-five degrees or more relative to the interlocked region 410. Such layers may even permit full, one hundred eighty-degree rotation of the plurality of two-dimensional woven plies 432. As depicted in FIG. 5B, the plurality of two-dimensional woven plies 432 is rotated to form a flange (e.g., the end flange 310 (FIG. 4A)) relative to the interlocked region 410 (e.g., a body of the composite component 300 (FIG. 4A)), by rotating the interlocked region 410 forty-five degrees or more, such as by eighty-five degrees or more and ninety-five degrees or less, relative to the interlocked region 410.

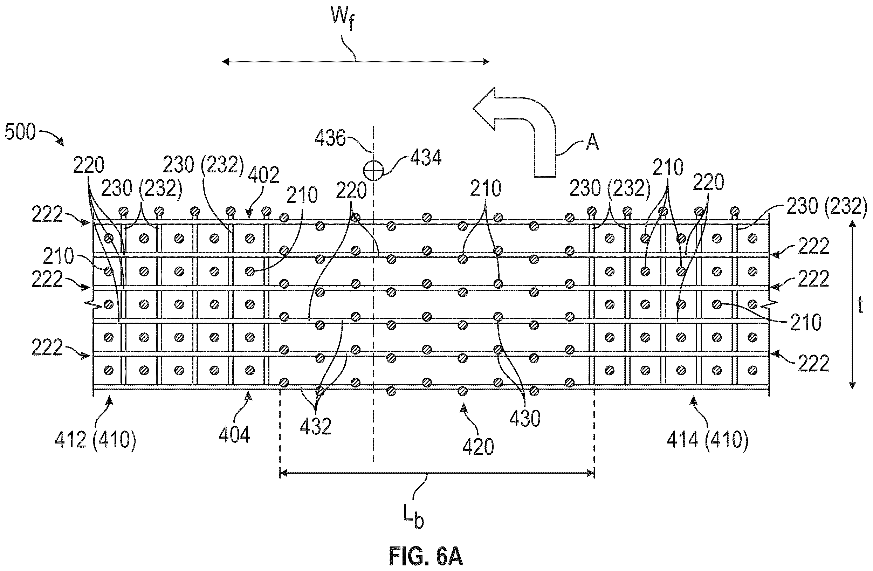

The bifurcated region 420 is woven and otherwise integrated into the woven fabric 400 in a number of different ways, allowing a number of shaped preforms to be prepared. FIGS. 6A to 10 depict some of these alternate arrangements and configurations. These arrangements and configurations are similar to the woven fabric 400, and the same reference numerals will be used for the same or similar components and features. The discussion above of these components and features also applies to those in FIGS. 6A to 10, and a detailed discussion of these components and features will be omitted in the following discussion.

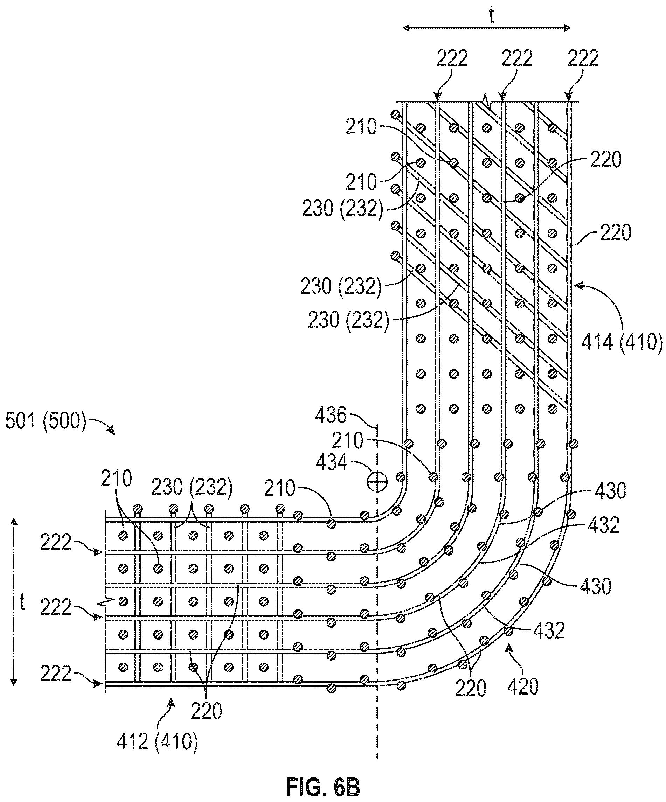

FIGS. 6A and 6B are schematic views of a woven fabric 500 that may be used to form the composite component 300 shown in FIGS. 4A and 4B or the composite component 301 shown in FIGS. 4C and 4D. The woven fabrics discussed herein may include a plurality of interlocked regions and bifurcated regions. As depicted in FIGS. 6A and 6B, the woven fabric 500 includes a plurality of interlocked regions, including a first interlocked region 412 and a second interlocked region 414, with a bifurcated region 420 positioned therebetween. The woven fabric 500 has a thickness in the thickness direction t and each of the first interlocked region 412, the second interlocked region 414, and the bifurcated region 420 extends through the thickness of the woven fabric 500 from the first surface 402 to the second surface 404. Each of the first interlocked region 412 and the second interlocked region 414 are similar to the interlocked region 410 discussed above and that discussion applies to each of the first interlocked region 412 and the second interlocked region 414. The weft fiber tows 220 in each weft fiber layers 222 is continuous and extends from the first interlocked region 412 through the bifurcated layers 430 to the second interlocked region 414.

With adjacent bifurcated layers 430 free from interconnection with each other, the weft fiber tows 220 of the bifurcated layers 430 allow for rotation by sliding past each other. More specifically, in step S10 (FIG. 3) the woven fabric 500 is woven with the reinforcing fiber tows 202 (FIG. 2A) positioned as described above. After the woven fabric 500 is positioned in step S20 (FIG. 3) as part of laying up the initial preform, the initial preform is shaped to form a shaped preform 501 (as shown in FIG. 6B) in step S30, such as by rotating the second interlocked region 414 relative to the first interlocked region 412 in the direction A about a rotational axis 434 extending in the warp direction Wp in a manner similar the rotation discussed above with reference to FIGS. 5A and 5B. FIG. 6A shows the woven fabric 500 in the initial preform, and the shaped preform 501 is shown in FIG. 6B.

As noted above, the interlocking fiber tows 230 can be through-thickness interlocking fiber tows, such as the orthogonal interlocking fiber tows 232. As depicted, each bifurcated layers 430 in the bifurcated region 420 has a bifurcated length L_{b} in the weft direction Wf. The bifurcated length L_{b} of each bifurcated layers 430 is the same in this embodiment. When the second interlocked region 414 woven, the interlocking fiber tows 230 can be woven with sufficient play to allow for some relative movement of the adjacent weft fiber layers 222 in the second interlocked region 414. The interlocking fiber tows 230 in the second interlocked region 414 move to an angled orientation relative to the thickness direction t of the shaped preform 501 after rotation.

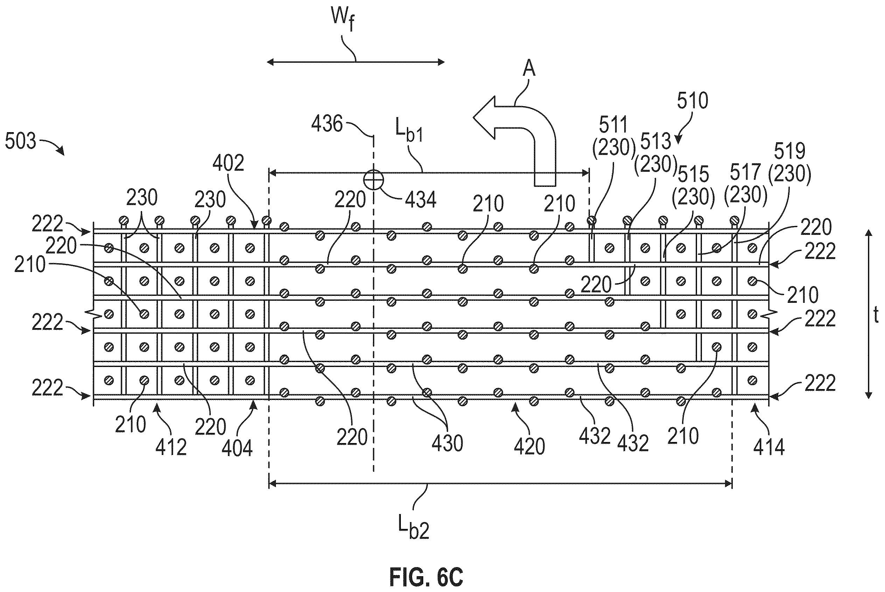

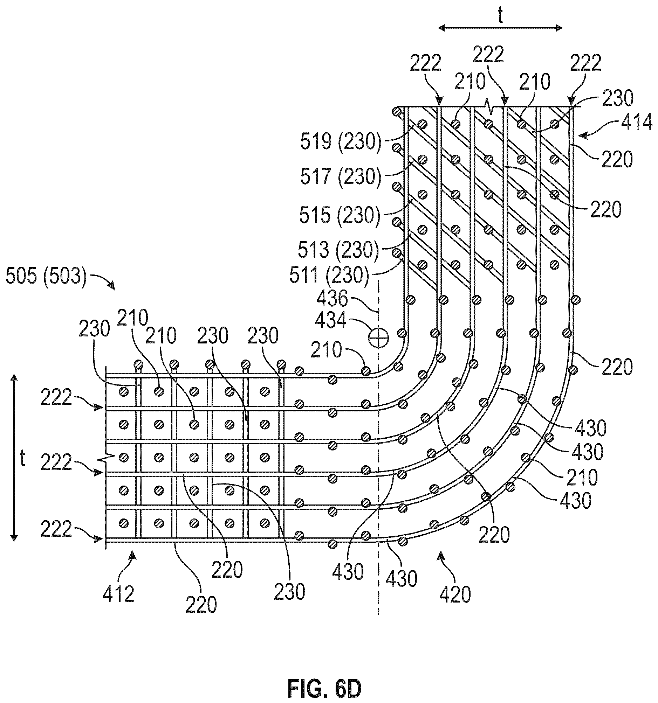

FIGS. 6C and 6D are schematic views of a woven fabric 503 that may be used to form the composite component 300 shown in FIGS. 4A and 4B or the composite component 301 shown in FIGS. 4C and 4D. FIG. 6D shows a shaped preform 505 using the woven fabric 503 shown in FIG. 6C. The woven fabric 503 shown in FIG. 6C is similar to that shown in FIG. 6A, but, instead of the bifurcated length of each bifurcated layers 430 being the same, the bifurcated length is different between layers. More specifically, as illustrated in FIG. 6C, the bifurcated length may increase relative to a direction from the first surface 402 towards the second surface 404 to allow the rotation of the second interlocked region 414 relative to the first interlocked region 412. More specifically, the bifurcated length may increase from a first bifurcated length L_{b1} at the first surface 402 to a second bifurcated length L_{b2} at the second surface 404. With the length of the second bifurcated length L_{b2} being longer than the first bifurcated length L_{b1}. Each adjacent bifurcated layer 430 can have a different bifurcated length. The bifurcated length can progressively increase from the first surface 402 towards the second surface 404. The bifurcated length can progressively increase for each adjacent bifurcated layer 430 from the first surface 402 towards the second surface 404.

The differing bifurcated lengths can be created in different ways. As depicted in FIG. 6C, for example, at least one of the first interlocked region 412 or the second interlocked region 414 includes interlocking fiber tows 230 that are woven to increase the amount of adjacent layers weft fiber layers 222 that are interlocked in a direction from the bifurcated region 420 toward the interlocked region, such as the second interlocked region 414. The amount of adjacent weft fiber layers 222 that are interlocked by the interlocking fiber tows 230 can progressively increase in the direction from the bifurcated region 420 toward the interlocked region, such as the second interlocked region 414. Successive interlocking fiber tows 230 can interlock more weft fiber layers 222 than preceding interlocking fiber tows 230 forming the interlocked region, such as the second interlocked region 414. In some embodiments, consecutive interlocking fiber tows 230 can interlock more weft fiber layers 222 than preceding interlocking fiber tows 230. For example, as shown in FIG. 6C, the first and second weft fiber layers 222 are interlocked by a first interlocking fiber tow 511, a second interlocking fiber tow 513 interlocks the first three weft fiber layers 222, a third interlocking fiber tow 515 interlocks the first four adjacent weft fiber layers 222, a fourth interlocking fiber tow 517 interlocks the first five adjacent weft fiber layers 222, and a fifth interlocking fiber tow 519 interlocks the full thickness of the woven fabric 503 (all six weft fiber layers 222). This pattern is illustrative and with more weft fiber layers 222 the pattern can continue. Additionally, instead of adding one weft fiber layers 222 at a time, more layers than one layer may be interlocked with each successive interlocking fiber tow 230.

With the woven fiber pattern illustrated in 6C, the second interlocked region 414 can have through thickness interlocking at a uniform position in the through thickness direction after the second interlocked region 414 has been rotated in direction A as shown in FIG. 6C. The interlocking fiber tows 230 in the second interlocked region 414 are angled after rotation in a manner similar to that discussed above with reference to FIG. 6B.

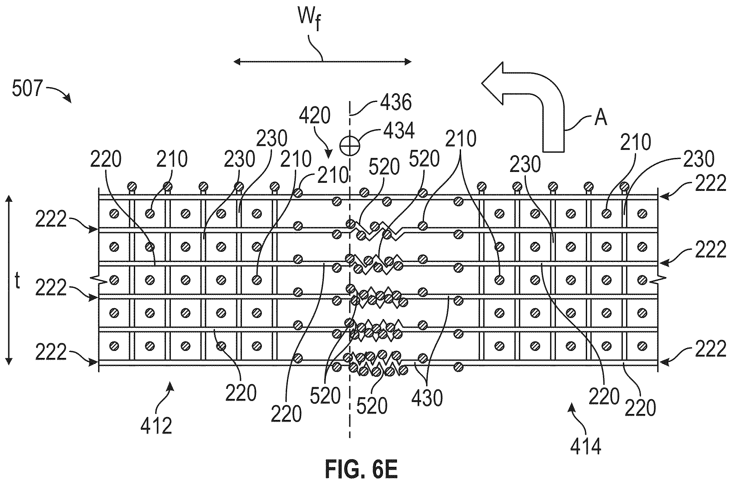

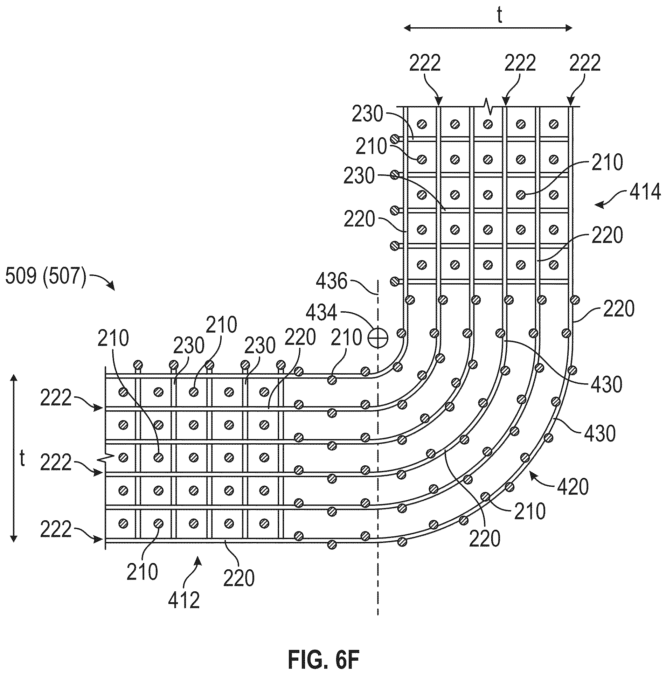

FIGS. 6E and 6F are schematic views of a woven fabric 507 that may be used to form the composite component 300 shown in FIGS. 4A and 4B or the composite component 301 shown in FIGS. 4C and 4D. FIG. 6F shows a shaped preform 509 using the woven fabric 507 shown in FIG. 6E. As noted above, the differing bifurcated lengths can be formed in different ways. The weft fiber tows 220 in each bifurcated layers 430 is woven to introduce additional length in the bifurcated region 420. The bifurcated length can be the same or similar to that discussed above. As shown in FIG. 6E, for example, the additional bifurcated length is introduced and can be bunched or gathered in a gathered segment 520 for each bifurcated layer 430. The bifurcated region 420 can include a plurality of bifurcated layers 430 with a gathered segment 520 to impart additional length to the bifurcated layers 430. As the woven fabric 507 is rotated in direction A during the shaping process (step S30 in FIG. 3), the gathered segment 520 of each bifurcated layer 430 spread outs or un-gathers. In this way, the interlocking fiber tows 230 of the second interlocked region 414 can maintain the positioning and origination as they were woven even after rotation, as illustrated in FIG. 6F.

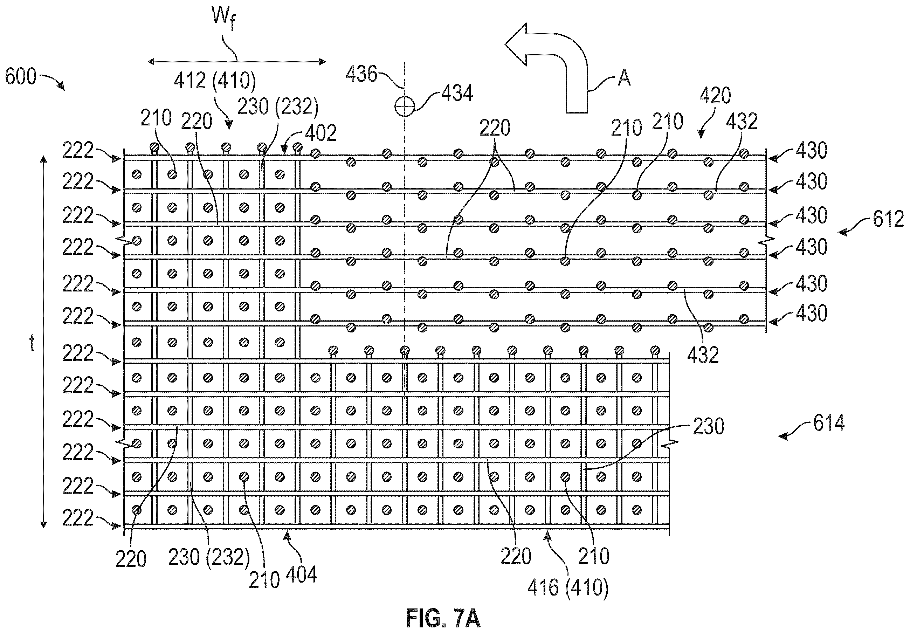

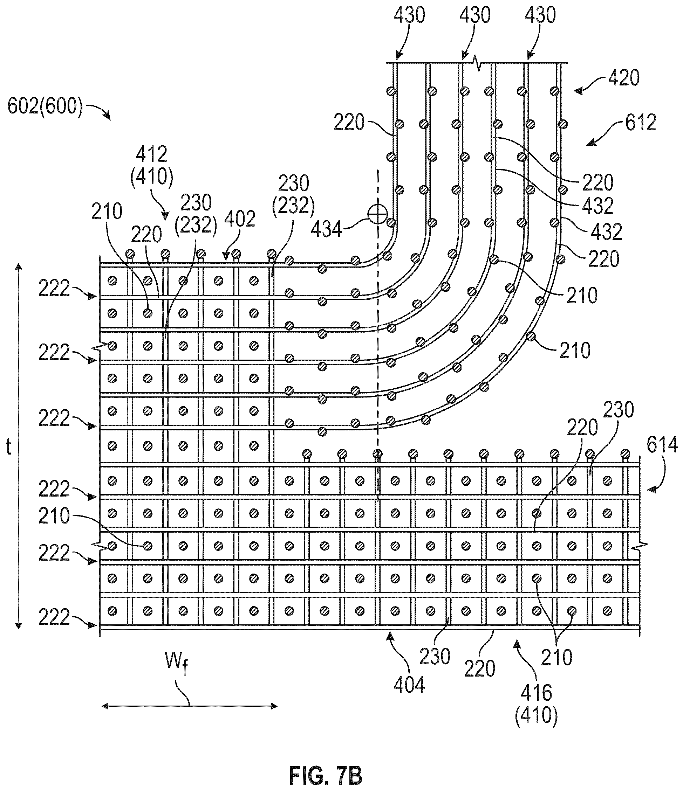

FIGS. 7A and 7B are schematic views of a woven fabric 600 that may be used to form the composite component 300 shown in FIGS. 4A and 4B or the composite component 301 shown in FIGS. 4C and 4D. The bifurcated region 420 of the woven fabric 400 depicted in FIGS. 5A and 5B extends through the thickness of the woven fabric 400. The bifurcated region 420 can have other thicknesses. As shown in FIG. 7A, for example, the bifurcated region 420 extends a portion of the thickness of the woven fabric 600 from the first surface 402. Here, the woven fabric 600 includes a plurality of portions in the thickness direction t, including a first portion 612 and a second portion 614. The first portion 612 can include the first surface 402. The second portion 614 can include the second surface 404. The reinforcing fiber tows 202 (FIG. 2A) in the first portion 612 of the woven fabric 600 shown in FIG. 7A are woven and arranged in a manner similar to the reinforcing fiber tows 202 shown in FIG. 5A with an interlocked region 410 (more specifically, a first interlocked region 412) and a bifurcated region 420. The reinforcing fiber tows 202 in the second portion 614 of the woven fabric 600 are also arranged in an interlocked region 410 and, more specifically, a third interlocked region 416. The first interlocked region 412 and the third interlocked region 416 can be interlocked with each other and integrally woven together as a continuous interlocking region. As shown in FIG. 7A, for example, the interlocking fiber tows 230 extend between the first interlocked region 412 and the third interlocked region 416 to interlock the first interlocked region 412 with the third interlocked region 416 and the first portion 612 with the second portion 614. While other arrangements of interlocking fiber tows 230 can be used to interlock the first interlocked region 412 with the third interlocked region 416, the interlocking fiber tows 230 shown in FIG. 7A are orthogonal interlocking fiber tows 232, and the orthogonal interlocking fiber tows 232 extend from the first surface 402 in the first interlocked region 412 to the second surface 404 in the third interlocked region 416. The third interlocked region 416 extends under the bifurcated region 420 in the thickness direction t. The bifurcated region 420, however, is separated from the third interlocked region 416 by one bifurcated layer 430 of the plurality of bifurcated layers 430.

The configuration of the woven fabric 600 shown in FIG. 7A thus allows for rotation in direction A of the bifurcated layers 430 (e.g., the two-dimensional woven plies 432) about the rotational axis 434 in a manner similar to the two-dimensional woven plies 432 discussed above with respect to the woven fabric 400 depicted in FIGS. 5A and 5B to form the end flange 310 (FIG. 4A), but the thickness of the end flange 310 (e.g., the bifurcated region 420 after rotation) can be less than the main body 302 (FIG. 4A) of the composite component 300 formed by the combined thickness of the first portion 612 and the second portion 614. FIG. 7B illustrates the woven fabric 600 after being shaped and is shown in a shaped preform 602 configuration.

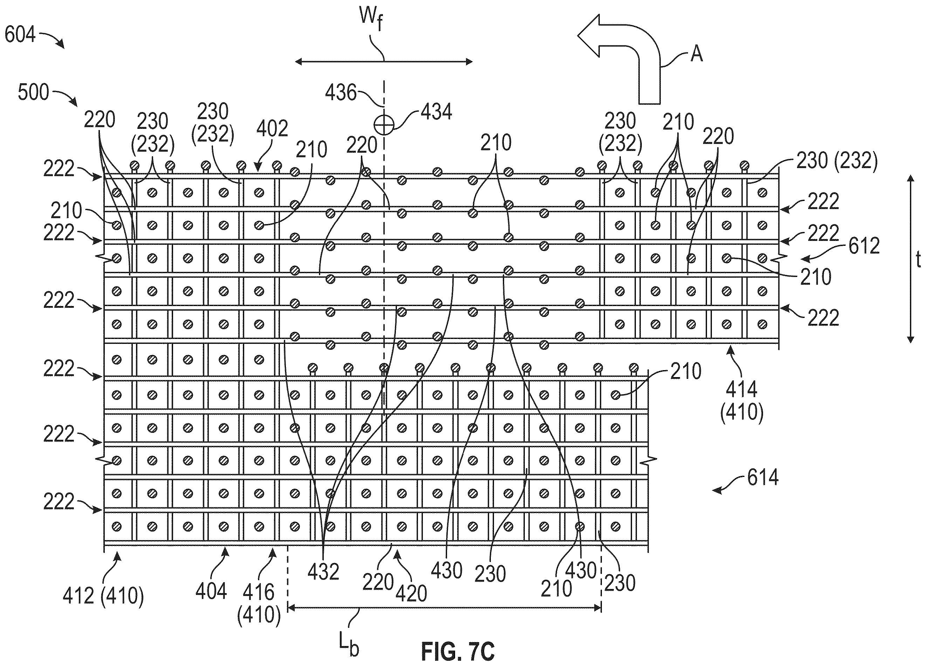

FIG. 7C is a schematic view of a woven fabric 604 that may be used to form the composite component 300 shown in FIGS. 4A and 4B or the composite component 301 shown in FIGS. 4C and 4D. The woven fabric 604 shown in FIG. 7C is similar to the woven fabric 600 shown in FIG. 7A, but the first portion 612 is woven with a second interlocked region 414 separated from the first interlocked region 412 by the bifurcated region 420 in a manner similar to that shown in FIG. 6A. Although shown with a configuration similar to the woven fabric 500, the first portion 612 can be woven with any one of the woven fabrics 500, 503, or 507 shown in FIGS. 6A to 6C. The second interlocked region 414 can be rotated relative to the first interlocked region 412 and the third interlocked region 416 to form a shaped preform used to form a composite component 300 (FIG. 4A) with an end flange 310 (FIG. 4A) having a thickness less than the main body 302 (FIG. 4) in a manner similar to that shown in FIG. 7B.

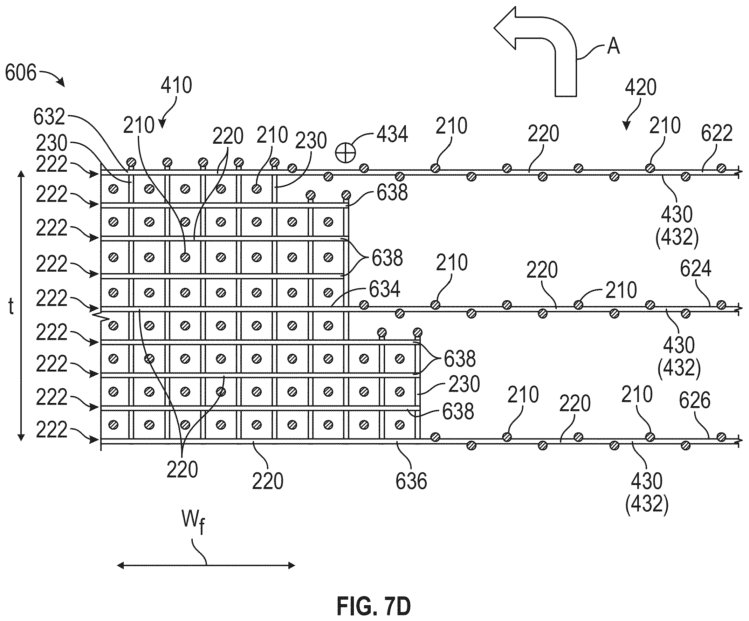

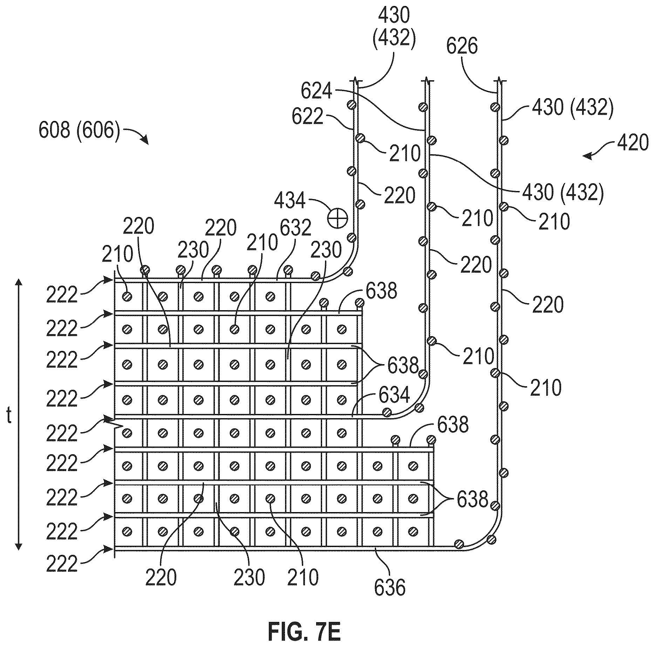

FIGS. 7D and 7E are schematic views of a woven fabric 606 that may be used to form the composite component 300 shown in FIGS. 4A and 4B or the composite component 301 shown in FIGS. 4C and 4D. FIG. 7F shows a shaped preform 608 using the woven fabric 606 shown in FIG. 7D. Like the shaped preform 602 shown in FIG. 7B, the shaped preform 608 shown in FIG. 7F can be used to form a composite component 300 (FIG. 4A) with an end flange 310 (FIG. 4A) having a thickness less than the main body 302 (FIG. 4). In the woven fabric 600 shown in FIG. 7A, the bifurcated layers 430 extend from adjacent interlocked regions 410 and extend from the weft fiber tows 220 that are adjacent to each other (i.e., weft fiber layers 222) in the interlocked regions 410. In the woven fabric 606 shown in FIG. 7D, the bifurcated layers 430 are spaced apart from each other in the thickness direction t relative to corresponding weft fiber tows 220 and weft fiber layers 222 in the interlocked region 410.

As shown in FIG. 7D, for example, the woven fabric 606 includes a first bifurcated layer 622, a second bifurcated layer 624, and a third bifurcated layer 626. The first bifurcated layer 622 extends from a first weft fiber layer 632 of the plurality of weft fiber layers 222 in the interlocked region 410. Similarly, the second bifurcated layer 624 extends from a second weft fiber layer 634 of the plurality of weft fiber layers 222 in the interlocked region 410, and the third bifurcated layer 626 extends from a third weft fiber layer 636 of the plurality of weft fiber layers 222 in the interlocked region 410. The first weft fiber layer 632 is separated from the second weft fiber layer 634 by a plurality of intermediate weft fiber layers 638, and the second weft fiber layer 634 is separated by the third bifurcated layer 626 by a plurality of intermediate weft fiber layers 638. Each of the bifurcated layers 430 are two-dimensional woven plies 432 that can be rotated upward in direction A, relative to the interlocked region 410, in step S30 (FIG. 3), in a manner similar to that discussed above to for the shaped preform 608.

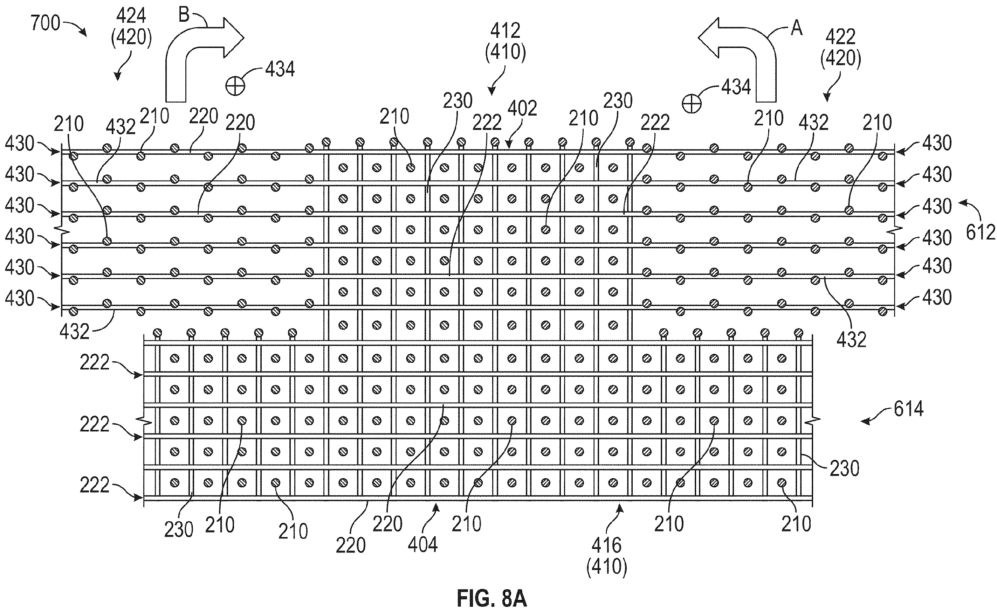

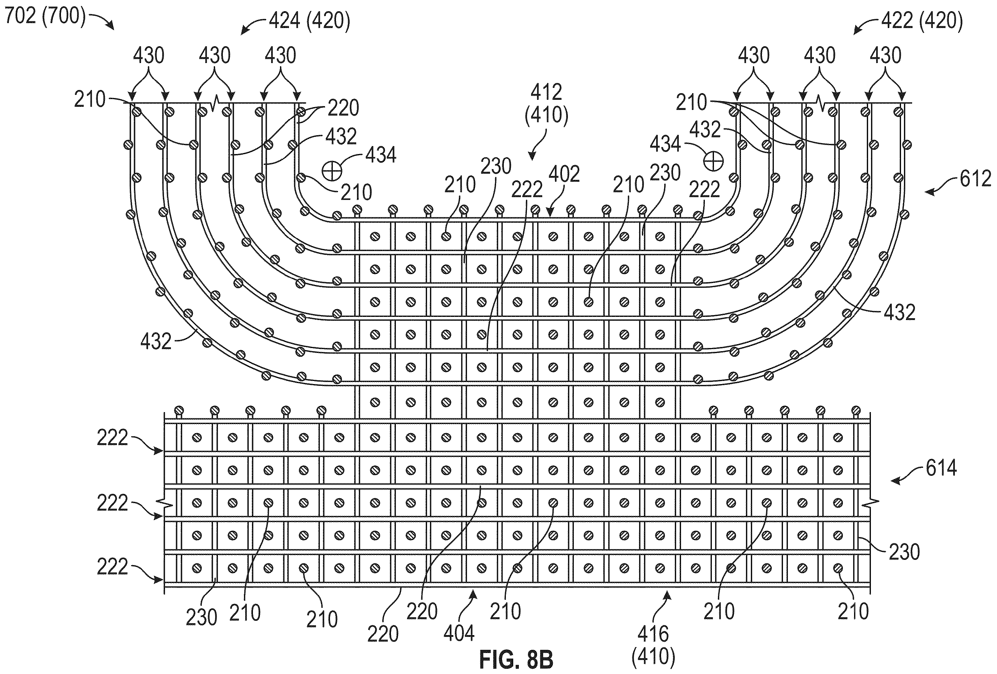

FIGS. 8A and 8B are schematic views of a woven fabric 700 that may be used to form a composite component. FIG. 8B shows a U-shaped preform 702 formed using the woven fabric 700 shown in FIG. 8A. The woven fabric 700 shown in FIG. 8A includes a plurality of bifurcated regions 420, including a first bifurcated region 422 and a second bifurcated region 424. An interlocked region 410, more specifically, the first interlocked region 412, is positioned between the first bifurcated region 422 and the second bifurcated region 424 in the weft direction Wf. The first bifurcated region 422 and the second bifurcated region 424 are each similar to the bifurcated region 420 discussed above with reference to FIG. 5A. The first bifurcated region 422 and the second bifurcated region 424 are mirror images of each other. The two-dimensional woven plies 432 of each of the first bifurcated region 422 and the second bifurcated region 424 can be rotated relative to the first interlocked region 412. The two-dimensional woven plies 432 of the first bifurcated region 422 can be rotated in direction A about a rotational axis 434 in a manner similar to that discussed above, and likewise, the two-dimensional woven plies 432 of the second bifurcated region 424 can be rotated in direction B about a rotational axis 434 that is a mirror image of the rotation of first bifurcated region 422 in direction A. Rotating the two-dimensional woven plies 432 of the first bifurcated region 422 and the second bifurcated region 424 can form the U-shaped preform 702 as shown in FIG. 8B.

The U-shaped preform 702 can be used to form a pi joint, into which an insert, such as another woven fabric, may be inserted. Each of the first bifurcated region 422 and the second bifurcated region 424 can extend a portion of the thickness of the woven fabric 700 from the first surface 402. Similar to FIG. 7A (discussed above), the woven fabric 700 can include a plurality of portions in the thickness direction t, including a first portion 612 and a second portion 614. The reinforcing fiber tows 202 (FIG. 2A) in the second portion 614 of the woven fabric 700 are woven to form an interlocked region 410 and, more specifically, a third interlocked region 416. The discussion of the third interlocked region 416 above, including the integration with the first interlocked region 412 also applies here. In FIG. 8A, the third interlocked region 416 extends under each of the first bifurcated region 422 and the second bifurcated region 424 in the thickness direction t. The first bifurcated region 422 and the second bifurcated region 424 are each separated from the third interlocked region 416 by one bifurcated layer 430 of the plurality of bifurcated layers 430.

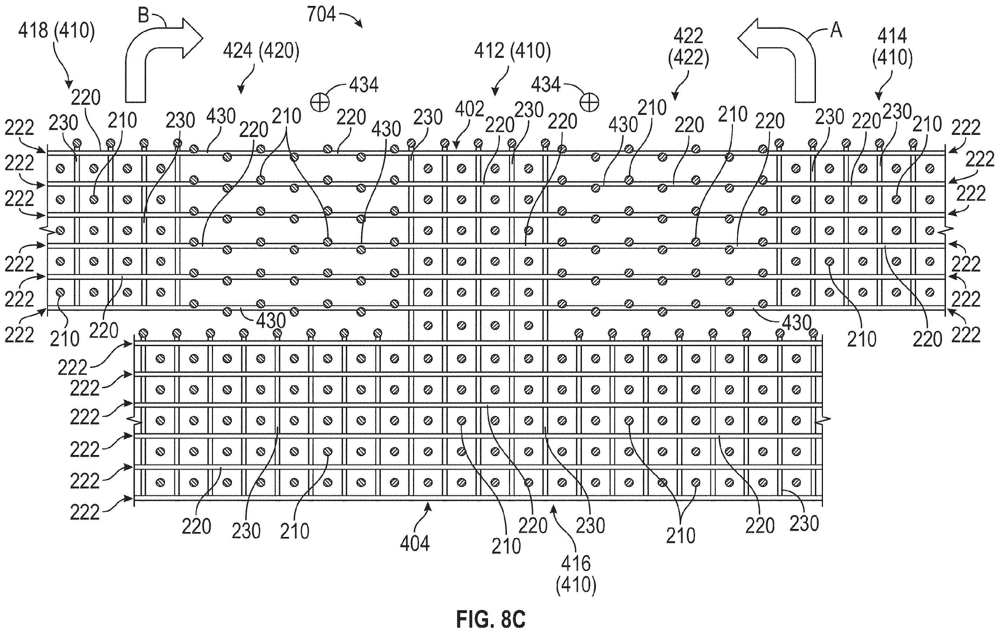

FIG. 8C is a schematic view of a woven fabric 704 that may be used to form the composite component. The woven fabric 704 shown in FIG. 8C is similar to the woven fabric 700 shown in FIG. 8A, but the first portion 612 is woven with a second interlocked region 414 separated from the first interlocked region 412 by the first bifurcated region 422 and a fourth interlocked region 418 separated from the first interlocked region 412 by the second bifurcated region 424. The reinforcing fiber tows 202 (FIG. 2A) are woven in the first portion 612 in a manner similar to that shown in FIG. 6A to separate the second interlocked region 414 from the first interlocked region 412 by the first bifurcated region 422 and the fourth interlocked region 418 from the first interlocked region 412 by the second bifurcated region 424, and the discussion above, applies here. Although shown with a configuration similar to the woven fabric 500, the first portion 612 can be woven with configurations similar to any one of the woven fabrics 500, 503, or 507 shown in FIGS. 6A to 6F. The second interlocked region 414 can be rotated relative to the first interlocked region 412 and the third interlocked region 416. The fourth interlocked region 418 also can be rotated relative to the first interlocked region 412 and the third interlocked region 416. Rotating the second interlocked region 414 and the fourth interlocked region 418 in this manner may be used to form a U-shaped preform similar to that shown in FIG. 8B.

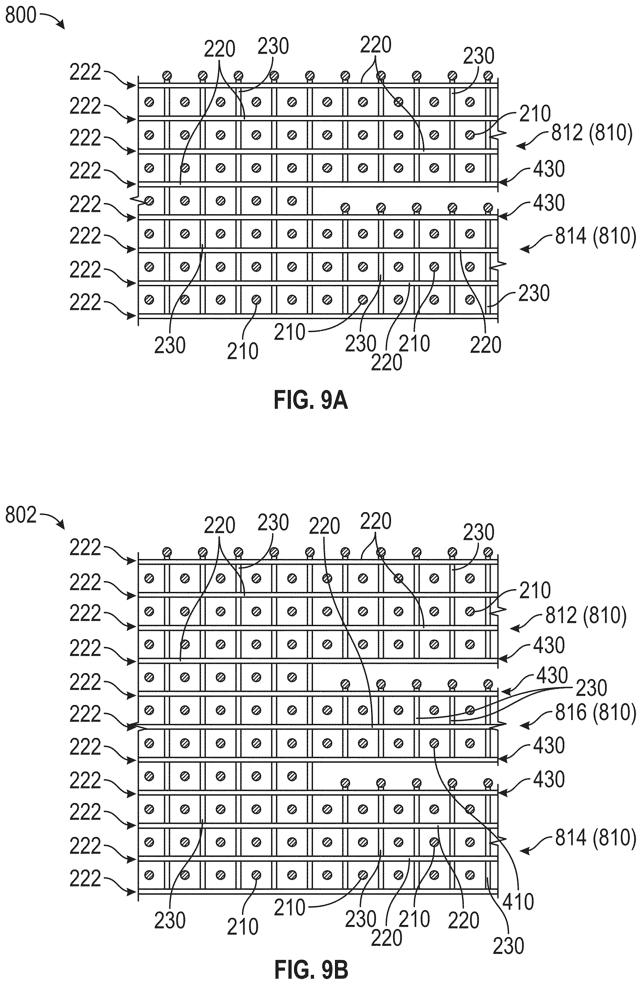

FIG. 9A and 9B are schematic views of woven fabrics 800 and 802 that include bifurcated layers 430. In the woven fabrics depicted in FIGS. 5A to 8C, the woven fabrics were bifurcated to form a plurality of two-dimensional woven plies 432 integrally woven with, and extending from, corresponding weft fiber layers 222 of the interlocked region 410. Instead of two-dimensional woven plies 432, adjacent layers may be bifurcated in the manner discussed above to separate and form a plurality of three-dimensional weave layers 810. The woven fabric 800 depicted in FIG. 9A shows two three-dimensional weave layers 810, a first three-dimensional weave layer 812 and a second three-dimensional weave layer 814, and the woven fabric 800 depicted in FIG. 9B shows three three-dimensional weave layers 810, including a third three-dimensional weave layer 816 positioned between the first three-dimensional weave layer 812 and the second three-dimensional weave layer 814.

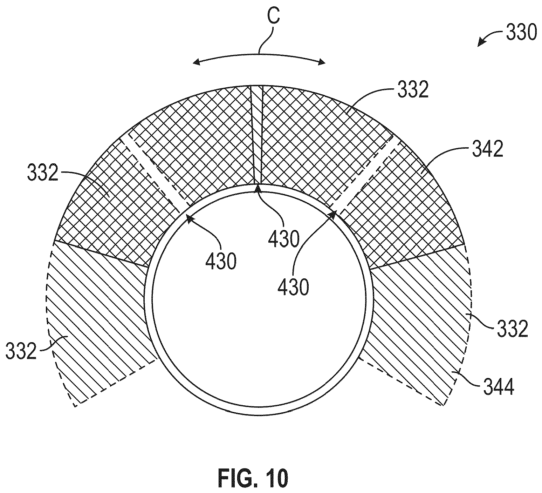

FIG. 10 is a schematic view of a preform 330 that may be used for a composite component of the turbine engine 100 (FIG. 1). The preform 330 has a plurality of arcuate sections 332. Here, the arcuate sections 332 are separated by bifurcated layers 430 that extend in a radial direction R of the preform 330. These bifurcated layers 430 form darts within the preform 330 allowing the arcuate sections 332 to rotate relative to each other and to form a circular section. The arcuate sections 332 can be formed using, for example, the woven fabric 800 depicted in FIG. 9A or the woven fabric 802 depicted in FIG. 9B. Each arcuate section 332 can be an arcuate section of a woven fabric (e.g., the woven fabric 800 or the woven fabric 802) with bifurcated layers 430 extending in a radial direction R of the woven fabric.

The preform 330 shown in FIG. 10 may include a plurality of axial layers. In FIG. 10 a first axial layer 342 and a second axial layer 344 are visible, and a portion of the first axial layer 342 is omitted to see the second axial layer 344. Forming the preform can including arranging one or more arcuate sections 332 to form the first axial layer 342 and arranging one or more arcuate sections 332 to form the second axial layer 344. When arranging the one or more arcuate sections 332 in each layer, the bifurcated layers 430 can be offset from each other in a circumferential direction C between adjacent layers. Offsetting the bifurcated layers 430 has the benefit of dispersing the separation between axial layers, such that separations between the arcuate sections 332 are not stacked on top of each other, strengthening the resulting composite component.

Discussed herein are woven fabrics 500, 503, 507, 600, 604, 606, 700, 704, 800, and 802 and methods of making such fabrics that include one or more interlocked regions 410 and one or more bifurcated regions 420, which allow a portion of the woven fabric 500, 503, 507, 600, 604, 606, 700, 704 to be rotated relative to another portion of the fabric, for forming flanges (e.g., the end flanges 310 and 320 or the mid-flanges 316 and 326), pi joints, and other complex geometries.

Further aspects of the present disclosure are provided by the subject matter of the following clauses.

A woven fabric includes a plurality of reinforcing fiber tows including a plurality of first fiber tows and a plurality of second fiber tows oriented transversely to the plurality of first fiber tows. The woven fabric is a three-dimensional woven fabric having a first direction, a second direction orthogonal to the first direction, and a thickness direction orthogonal to each of the first direction and the second direction. At least one of the plurality of first fiber tows or the plurality of second fiber tows is arranged in the thickness direction to form a plurality of fiber layers. The woven fabric including an interlocked region and a bifurcated region. In the interlocked region, a plurality of interlocking fiber tows is interwoven through the plurality of fiber layers to connect the plurality of fiber layers to each other in the thickness direction. In the bifurcated region adjacent layers of the plurality of fiber layers are free from interconnection by interlocking fiber tows forming a plurality of bifurcated layers.

The woven fabric of any preceding clause, wherein the plurality of bifurcated layers is integrally woven with and extends from corresponding fiber layers of the interlocked region.

The woven fabric of any preceding clause, wherein the woven fabric has a thickness in the thickness direction and the bifurcated region extends through the thickness of the woven fabric.

The woven fabric of any preceding clause, wherein the woven fabric has a thickness in the thickness direction and the interlocked region extends through the thickness of the woven fabric.

The woven fabric of any preceding clause, wherein the plurality of first fiber tows is a plurality of warp fiber tows and the plurality of second fiber tows is a plurality of weft tows.

The woven fabric of any preceding clause, wherein the first direction is a warp direction and the plurality of interlocking fiber tows are woven in the warp direction.

The woven fabric of any preceding clause, wherein the interlocked region is a first interlocked region and the woven fabric further comprises a second interlocked region.

The woven fabric of any preceding clause, wherein, in at least one of the first direction or the second direction, the bifurcated region is located between the first interlocked region and the second interlocked region.

The woven fabric of any preceding clause, wherein the woven fabric has a thickness in the thickness direction and includes a plurality of portions in the thickness direction including a first portion and a second portion, the bifurcated region being in the first portion.

The woven fabric of any preceding clause, wherein the woven fabric has a surface and the bifurcated region extends from the surface into the woven fabric.

The woven fabric of any preceding clause, wherein the woven fabric has a first surface and a second surface, and wherein, in one of the first direction or the second direction, the bifurcated region has a bifurcated length for each adjacent bifurcated layer, the bifurcated length increasing in a direction from the first surface towards the second surface.

The woven fabric of any preceding clause, wherein one or more bifurcated layers of the plurality of bifurcated layers is woven with a gathered segment to impart additional length.

A woven fabric includes a plurality of reinforcing fiber tows. The woven fabric including the plurality of reinforcing fiber tows arranged in a three-dimensional (3D) woven region and a two-dimensional (2D) region.

The woven fabric of any preceding clause, wherein the two-dimensional (2D) region comprises a plurality of two-dimensional woven plies.

The woven fabric of any preceding clause, wherein the plurality of two-dimensional woven plies is integrally woven with and extend from corresponding fiber layers of the three-dimensional (3D) woven region.

A method of manufacturing a woven fabric for a composite component for a gas turbine engine includes weaving a plurality of reinforcing fiber tows to form the woven fabric of any preceding clause.

A method of manufacturing a woven fabric for a composite component for a gas turbine engine comprises weaving a plurality of reinforcing fiber tows to form the woven fabric, the plurality of reinforcing fiber tows including a plurality of first fiber tows and a plurality of second fiber tows oriented transversely to the plurality of first fiber tows, the woven fabric being a three-dimensional woven fabric having a first direction, a second direction orthogonal to the first direction, and a thickness direction orthogonal to each of the first direction and the second direction, at least one of the plurality of first fiber tows or the plurality of second fiber tows being arranged in the thickness direction to form a plurality of fiber layers, interweaving a plurality of interlocking fiber tows through the plurality of fiber layers to connect the plurality of fiber layers to each other in the thickness direction to form an interlocked region, and forming a bifurcated region where adjacent layers of the plurality of fiber layers are free from interconnection by interlocking fiber tows forming a plurality of bifurcated layers.

The method of manufacturing the woven fabric of any preceding clause, wherein the woven fabric has a first surface and a second surface, and, in one of the first direction or the second direction, the bifurcated region having a bifurcated length for each adjacent bifurcated layer, the bifurcated length increasing in a direction from the first surface towards the second surface.

The method of manufacturing the woven fabric of any preceding clause, wherein one or more bifurcated layers of the plurality of bifurcated layers is woven with a gathered segment to impart additional length.

The method of manufacturing the woven fabric of any preceding clause, wherein the woven fabric has a thickness in the thickness direction and the bifurcated region extends through the thickness of the woven fabric.

The method of manufacturing the woven fabric of any preceding clause, wherein the woven fabric has a thickness in the thickness direction and the interlocked region extends through the thickness of the woven fabric.

The method of manufacturing the woven fabric of any preceding clause, wherein the interlocked region is a first interlocked region and the method further comprises forming a second interlocked region by interweaving a plurality of interlocking fiber tows through the plurality of fiber layers to connect the plurality of fiber layers to each other in the thickness direction.

The method of manufacturing the woven fabric of any preceding clause, wherein in at least one of the first direction or the second direction, the bifurcated region is located between the first interlocked region and the second interlocked region.

The method of manufacturing the woven fabric of any preceding clause, wherein the plurality of first fiber tows is a plurality of warp fiber tows and the plurality of second fiber tows is a plurality of weft tows.

The method of manufacturing the woven fabric of any preceding clause, wherein the first direction is a warp direction and the plurality of interlocking fiber tows are woven in the warp direction.

The method of manufacturing the woven fabric of any preceding clause, wherein the interlocking fiber tows are woven in an orthogonal interlocking pattern.

The method of manufacturing the woven fabric of any preceding clause, wherein orthogonal interlocking pattern extends through the thickness of the woven fabric.

The method of manufacturing the woven fabric of any preceding clause, wherein the interlocking fiber tows are woven in an angle interlock pattern.

The method of manufacturing the woven fabric of any preceding clause, wherein angle interlock pattern extends through adjacent fiber layers in an alternating or a sinusoidal pattern to interlock these adjacent layers with each other.

The method of manufacturing the woven fabric of any preceding clause, wherein angle interlock pattern extends through more than two adjacent fiber layers.

The method of manufacturing the woven fabric of any preceding clause, wherein angle interlock pattern extends through the thickness of the woven fabric.

The method of manufacturing the woven fabric of any preceding clause, wherein the woven fabric has a thickness in the thickness direction and includes a plurality of portions in the thickness direction including a first portion and a second portion, the bifurcated region being the first portion.

The method of manufacturing the woven fabric of any preceding clause, wherein the woven fabric has a surface and the bifurcated region extends from the surface into the woven fabric.

The method of manufacturing the woven fabric of any preceding clause, wherein the interlocked region is a first interlocked region and the method further comprises forming a second interlocked region by interweaving a plurality of interlocking fiber tows through the plurality of fiber layers in the second portion.

A method of forming a preform for a composite component includes positioning the woven fabric of any clause to form an initial preform, and rotating at least a portion of the woven fabric about an axis extending in one of the first direction or the second direction to form the preform, the axis being located in a plane intersecting the bifurcated region.

The method of forming the preform of any preceding clause includes preparing a woven fabric using the method of manufacturing the woven fabric of any preceding clause.

The method of forming the preform of any preceding clause, wherein the rotated portion of the woven fabric is shaped to form a flange relative to the interlocked region.

The method of forming the preform of any preceding clause, wherein rotating the portion of the woven fabric includes rotating at least one layer of the plurality of fiber layers by forty-five degrees or more.

The method of forming the preform of any preceding clause, wherein rotating the portion of the woven fabric includes rotating at a first bifurcated layer and a second bifurcated layer of the plurality of bifurcated layers by forty-five degrees or more, the first bifurcated layer and the second bifurcated layer extending from corresponding second fiber tows of the interlocked region, corresponding second fiber tows being spaced apart from each other in the thickness direction relative to other second fiber tows of the interlocked region.

The method of forming the preform of any preceding clause, wherein the interlocked region is a first interlocked region and the method further comprises forming a second interlocked region by interweaving a plurality of interlocking fiber tows through the plurality of fiber layers to connect the plurality of fiber layers to each other in the thickness direction, in at least one of the first direction or the second direction, the bifurcated region being located between the first interlocked region and the second interlocked region, and rotating the portion of the woven fabric including rotating the second interlocked region by forty-five degrees.

The method of any preceding clause, wherein the interlocked region is a first interlocked region and the method further comprises forming a second interlocked region by interweaving a plurality of interlocking fiber tows through the plurality of fiber layers to connect the plurality of fiber layers to each other in the thickness direction, wherein, in at least one of the first direction or the second direction, the bifurcated region is located between the first interlocked region and the second interlocked region, and wherein rotating the portion of the woven fabric includes rotating the second interlocked region forty-five degrees or more.

The method of forming the preform of any preceding clause, wherein the bifurcated region is a first bifurcated region with a plurality of first bifurcated layers, and the method further comprises forming a third interlocked region by interweaving a plurality of interlocking fiber tows through the plurality of fiber layers to connect the plurality of fiber layers to each other in the thickness direction, and forming a second bifurcated region where adjacent layers of the plurality of fiber layers are free from interconnection by interlocking fiber tows forming a plurality of second bifurcated layers, in at least one of the first direction or the second direction, the first bifurcated region being located between the first interlocked region and the second interlocked region, and the second bifurcated region is located between the first interlocked region and the third interlocked region, and rotating the portion of the woven fabric including rotating the second interlocked region and the third interlocked region to form a U-shape with the first interlocked region.

The method of forming the preform of any preceding clause, wherein the woven fabric has a thickness in the thickness direction and includes a plurality of portions in the thickness direction including a first portion and a second portion, the bifurcated region being the first portion, and the method further comprising forming a third interlocked region by interweaving a plurality of interlocking fiber tows through the plurality of fiber layers in the second portion.

An arcuate section of a woven fabric includes a plurality of reinforcing fiber tows including a plurality of first fiber tows and a plurality of second fiber tows oriented transversely to the plurality of first fiber tows. The woven fabric is a three-dimensional woven fabric having a first direction, a second direction orthogonal to the first direction, and a thickness direction orthogonal to each of the first direction and the second direction. At least one of the plurality of first fiber tows or the plurality of second fiber tows is arranged in the thickness direction to form a plurality of fiber layers. The woven fabric including an interlocked region. In the interlocked region, a plurality of interlocking fiber tows is interwoven through the plurality of fiber layers to connect the plurality of fiber layers to each other in the thickness direction. The woven fabric including bifurcated layers that extend in a radial direction R of the woven fabric.

A method of forming a preform for a composite component includes arranging one or more arcuate sections of any preceding clause to form a first axial layer and arranging one or more arcuate sections of any preceding clause to form a second axial layer, wherein the bifurcated layers of the second axial layer are offset from the bifurcated layers of the first axial layer in a circumferential direction C of the preform.

The method of forming a preform for a composite component of any preceding clause further weaving a plurality of reinforcing fiber tows to form one or more of the arcuate sections of the woven fabric.

A method of manufacturing a composite component includes preparing a preform using the method of forming the preform of any preceding clause, the plurality of reinforcing fiber tows including prepreg fiber tows to introduce a matrix material, and curing the preform including the matrix material to generate the composite component.

A method of manufacturing a composite component includes preparing a preform using the method of forming the preform of any preceding clause, injecting a matrix material into the preform to generate an infiltrated preform, and curing the infiltrated preform to generate the composite component.

A method of manufacturing a composite component includes preparing a preform using the method of forming the preform of any preceding clause, providing a matrix material for the preform, and curing the preform including the matrix material to generate the composite component.

A method of manufacturing the composite component according to the method of any preceding clause, wherein the plurality of reinforcing fiber tows includes prepreg fiber tows to introduce the matrix material.

A method of manufacturing the composite component according to the method of any preceding clause, wherein providing the matrix material includes injecting a matrix material into the preform to generate an infiltrated preform and curing the preform includes curing the infiltrated preform.

Although the foregoing description is directed to certain embodiments, other variations and modifications will be apparent to those skilled in the art and may be made without departing from the disclosure. Moreover, features described in connection with one embodiment may be used in conjunction with other embodiments, even if not explicitly stated above.

## Claims

1. A method of manufacturing a woven fabric (400, 408, 500, 504, 520, 600, 604, 700, 702) for a composite component (300, 301) for a gas turbine engine (100), the method comprising:
weaving a plurality of reinforcing fiber tows (202) to form the woven fabric (400, 408, 500, 504, 520, 600, 604, 700, 702), the plurality of reinforcing fiber tows (202) including a plurality of first fiber tows (210) and a plurality of second fiber tows (220) oriented transversely to the plurality of first fiber tows (210), the woven fabric (400, 408, 500, 504, 520, 600, 604, 700, 702) being a three-dimensional woven fabric (400, 408, 500, 504, 520, 600, 604, 700, 702) having a first direction, a second direction orthogonal to the first direction, and a thickness direction orthogonal to each of the first direction and the second direction, at least one of the plurality of first fiber tows (210) or the plurality of second fiber tows (220) being arranged in the thickness direction to form a plurality of fiber layers (222);
interweaving a plurality of interlocking fiber tows (230) through the plurality of fiber layers (222) to connect the plurality of fiber layers (222) to each other in the thickness direction to form an interlocked region (410); and
forming a bifurcated region (420) where adjacent layers of the plurality of fiber layers (222) are free from interconnection by interlocking fiber tows (230) forming a plurality of bifurcated layers (430).

2. The method of claim 1, wherein the woven fabric (400, 408, 500, 504, 520, 600, 604, 700, 702) has a first surface (402) and a second surface (404), in one of the first direction or the second direction, the bifurcated region (420) has a bifurcated length for each adjacent bifurcated layer (430), the bifurcated length increasing in a direction from the first surface (402) towards the second surface (404).

3. The method of claim 1 or 2, wherein the plurality of first fiber tows (210) is a plurality of warp fiber tows (210) and the plurality of second fiber tows (220) is a plurality of weft tows (220),
wherein, preferably the first direction is a warp direction and the plurality of interlocking fiber tows (230) are woven in the warp direction.

4. The method of any one of claims 1 to 3, wherein the woven fabric (400, 408) has a thickness in the thickness direction and the bifurcated region (420) extends through the thickness of the woven fabric (400, 408), and/or
wherein the woven fabric (400, 408, 500, 504, 520, 600, 604, 700, 702) has a thickness in the thickness direction and the interlocked region (410) extends through the thickness of the woven fabric (400, 408, 500, 504, 520, 600, 604, 700, 702).

5. The method of any one of claims 1 to 3, wherein the interlocked region (410) is a first interlocked region (412) and the method further comprises forming a second interlocked region (414) by interweaving a plurality of interlocking fiber tows (230) through the plurality of fiber layers (222) to connect the plurality of fiber layers (222) to each other in the thickness direction.

6. The method of claim 5, wherein, in at least one of the first direction or the second direction, the bifurcated region (420) is located between the first interlocked region (412) and the second interlocked region (414).

7. The method of any one of claims 1 to 3, wherein the woven fabric (500, 504, 600, 604) has a thickness in the thickness direction and includes a plurality of portions in the thickness direction including a first portion (512) and a second portion (514), the bifurcated region (420) being the first portion (512).

8. The method of claim 7, wherein the woven fabric (500, 504, 600, 604) has a surface (402) and the bifurcated region (420) extends from the surface (402) into the woven fabric (500, 504, 600, 604), and/or
wherein the interlocked region (410) is a first interlocked region (412) and the method further comprises forming a second interlocked region (414) by interweaving a plurality of interlocking fiber tows (230) through the plurality of fiber layers (222) in the second portion (514).

9. A method of forming a preform (330) for a composite component (300, 301), the method comprising:
preparing a woven fabric (400, 408, 500, 504, 520, 600, 604, 700, 702) using the method of any one of claims 1 to 8;
placing the woven fabric (400, 408, 500, 504, 520, 600, 604, 700, 702) to form an initial preform (330); and
rotating at least a portion of the woven fabric (400, 408, 500, 504, 520, 600, 604, 700, 702) about an axis (434) extending in one of the first direction or the second direction to form the preform (330), the axis (434) being located in a plane (436) intersecting the bifurcated region (420).

10. The method of claim 9, wherein the rotated portion of the woven fabric (400, 408, 500, 504, 520, 600, 604, 700, 702) is shaped to form a flange (310, 316, 320, 326) relative to the interlocked region (410),

11. The method of claim 9 or 10, wherein rotating the portion of the woven fabric (400, 408, 500, 504, 520, 600, 604, 700, 702) includes rotating at least one layer of the plurality of fiber layers (222) more than forty-five degrees, or
wherein rotating the portion of the woven fabric (520) includes rotating at a first bifurcated layer (430) and a second bifurcated layer (430) of the plurality of bifurcated layers (430) more than forty-five degrees, the first bifurcated layer (430) and the second bifurcated layer (430) extending from corresponding second fiber tows (220) of the interlocked region (410), corresponding second fiber tows (220) being spaced apart from each other in the thickness direction relative to other second fiber tows (220) of the interlocked region (410).

12. The method of claim 9 or 10, wherein the interlocked region (410) is a first interlocked region (412) and the method further comprises forming a second interlocked region (414) by interweaving a plurality of interlocking fiber tows (230) through the plurality of fiber layers (222) to connect the plurality of fiber layers (222) to each other in the thickness direction,
wherein, in at least one of the first direction or the second direction, the bifurcated region (420) is located between the first interlocked region (412) and the second interlocked region (414), and
wherein rotating the portion of the woven fabric (408, 500, 600) includes rotating the second interlocked region (414) more than forty-five degrees.

13. The method of claim 12, wherein the bifurcated region (420) is a first bifurcated region (422) with a plurality of first bifurcated layers (430), and the method further comprises:
forming a third interlocked region (418) by interweaving a plurality of interlocking fiber tows (230) through the plurality of fiber layers (222) to connect the plurality of fiber layers (222) to each other in the thickness direction; and
forming a second bifurcated region (424) where adjacent layers of the plurality of fiber layers (222) are free from interconnection by interlocking fiber tows (230) forming a plurality of second bifurcated layers (430);
wherein, in at least one of the first direction or the second direction, the first bifurcated region (422) is located between the first interlocked region (412) and the second interlocked region (414), and the second bifurcated region (424) is located between the first interlocked region (412) and the third interlocked region (416), and
wherein rotating the portion of the woven fabric (600) includes rotating the second interlocked region (414) and the third interlocked region (416) to form a U-shape with the first interlocked region (412).

14. The method of claim 12, wherein the woven fabric (500) has a thickness in the thickness direction and includes a plurality of portions in the thickness direction including a first portion (512) and a second portion (514), the bifurcated region (420) being the first portion (512), and
wherein the method further comprises forming a third interlocked region (416) by interweaving a plurality of interlocking fiber tows (230) through the plurality of fiber layers (222) in the second portion (514).

15. A method of manufacturing a composite component (300, 301), the method comprising:
preparing a preform (330) using the method of any one of claims 9 to 14;
providing a matrix material for the preform (330); and
curing the preform (330) including the matrix material to generate the composite component (300, 301),
wherein the plurality of reinforcing fiber tows (202) includes prepreg fiber tows to introduce the matrix material, or
wherein providing the matrix material includes injecting a matrix material into the preform (330) to generate an infiltrated preform (330) and curing the preform (330) includes curing the infiltrated preform (330).
